# EUROPÄISCHE PATENTSCHRIFT

(11) **EP 1 244 516 B1**
(45) Veröffentlichungstag und Bekanntmachung des Hinweises auf die Patenterteilung: **28.05.2003**
(21) Anmeldenummer: 00983202.3
(22) Anmeldetag: 01.12.2000
(51) Int. Cl.: B01J 20/32, G01N 30/48

(54) **VERFAHREN ZUR HERSTELLUNG TEMPLAT-GEPRÄGTER MATERIALIEN MIT HOHER BINDUNGSSPEZIFITÄT UND SELEKTIVITÄT UND IHRE VERWENDUNG**
METHOD FOR PRODUCING TEMPLATE-TEXTURED MATERIALS WITH HIGH BINDING SPECIFICITY AND SELECTIVITY AND UTILIZATION OF SAID MATERIALS
PROCEDE DE FABRICATION DE MATERIAUX A STRUCTURE MATRICIELLE AYANT UNE SPECIFICITE DE LIAISON ET UNE SELECTIVITE ELEVEES ET UTILISATION DE CES MATERIAUX

(30) Priorität: 03.12.1999 DE 19959264
(43) Veröffentlichungstag der Anmeldung: 02.10.2002
(73) Patentinhaber: Elipsa GmbH, 12555 Berlin (DE)
(72) Erfinder: ULBRICHT, Mathias, 10407 Berlin (DE); SERGEYEVA, Tatiana A., 03187 Kiev (UA); MATUSCHEWSKI, Heike, 13187 Berlin (DE); SCHEDLER, Uwe, 10119 Berlin (DE); PILETSKY, Sergey A., 252107 Kiev (UA)
(74) Vertreter: Ziebig, Marlene, Dr. Dipl.-Chem.
(86) Internationale Anmeldenummer: EP0012095
(87) Internationale Veröffentlichungsnummer: WO01039881

(56) Entgegenhaltungen:
- WO-A-00/07702
- WO-A-01/19886
- WO-A-94/16319
- US-A- 4 618 533
- US-A- 5 372 719
- US-A- 5 786 428
- PILETSKY S A; PANASYUK T L; PILETSKAYA E V; NICHOLLS I A; ULBRICHT M "Receptor and transport properties of imprinted polymer membranes - a review", JOURNAL OF MEMBRANE SCIENCE Bd. 157, Nr. 2, 7. Mai 1999 (1999-05-07), Seiten 263-278; XP004222951, ISSN 0376-7388
- HONG YING WANG ET AL.: 'Surface molecular imprinting on photosensitive dithiocarbamoyl polyacrylonitrile membranes using photograft polymerization' J. CHEM. TECH. BIOTECHNOL. Bd. 70, 1997, Seiten 355 - 362, XP002935306
- ULBRICHT M "Photograft-polymer-modified microporous membranes with environment-sensitive permeabilities", REACTIVE & FUNCTIONAL POLYMERS Bd. 31, Nr. 2, 1. September 1996 (1996-09-01), Seiten 165-177; XP004052643, ISSN 1381-5148

## Beschreibung

Die Erfindung betrifft ein Verfahren zur Herstellung neuer Templat-geprägter Materialien in Gestalt Templat-geprägter Polymere (TGP) mit hoher Bindungsspezifität und Selektivität auf einem festen Träger und ihre Verwendung für die substanzspezifische Stofftrennung und -analytik.
In LifeSciences und Biotechnologie benötigt man für Substanzen wie Enzyme, monoklonale Antikörper, rekombinante Proteine oder kleinere Biomoleküle neue effiziente Trennund Reinigungsstrategien sowie Nachweisverfahren. Dies gilt auch für synthetische Wirkstoffe, insbesondere wenn sie eine komplexe Struktur oder/und ein höheres Molekulargewicht oder/und eine eingeschränkte Stabilität aufweisen.
Für alle diese Anwendungsgebiete werden substanzspezifische Hochleistungsmaterialien gesucht, wobei eine große Flexibilität in Anpassung an die speziellen Substanzen oder Wirkstoffe erforderlich ist. Vorzugsweise werden feste Materialien (Partikel, Filme, Gefäße, Filter, Membranen) eingesetzt, um die Phasentrennung von festen und flüssigen Stoffströmen zu vereinfachen. Im Unterschied zu Trennverfahren, die auf unterschiedlichen physikalischen Eigenschaften beruhen, ist die chemische Affinität zum Träger die Voraussetzung für substanzspezifische Trennungen. Substanzspezifität kann durch Wechselwirkungen zwischen biologischen oder biomimetischen Liganden und Rezeptoren erzielt werden. Für Affinitätstrennungen werden bislang entweder spezifische, aber sehr empfindliche biologische Liganden/Rezeptoren (z.B. Antikörper, Enzyme) oder relativ unspezifische synthetische Liganden (z.B. Farbstoffe, Metallchelate) verwendet; Beispiele sind Chromatographie, Festphasenextraktion, Membrantrennung, Festphasenassays oder Sensoren.

Porenfreie Filme, Schichten oder Partikel mit affinen Liganden an der Oberfläche besitzen eine geringe spezifische Oberfläche und damit beschränkte Bindungskapazität. Bei porösen Materialien mit größerer spezifischer Oberfläche treten typischerweise Einschränkungen der Bindungskapazität durch Diffusionslimitierungen auf. Analoge Limitierungen können in Packungen von Partikeln auftreten. Gerichtet durchströmbare poröse Filter oder Membranen sind deshalb besonders attraktive alternative Materialien. Etablierte Membranverfahren mit porösen Membranen wie Mikro- oder Ultrafiltration funktionieren nach dem Größenausschlußprinzip. Die Trennung von Substanzen ähnlicher Molekülgröße mit porösen Membranen erfordert zusätzlich spezifische (Affinitäts-) Wechselwirkungen mit der Membran.

Die Hauptmotivation für die Anwendung von Affinitätsmembranen besteht in der Möglichkeit der gerichteten Anströmung trennspezifischer Gruppen (Liganden/Rezeptoren), die sich in großer Dichte in den Poren befinden. Damit wird eine drastische Verbesserung der Effektivität (geringerer Druckabfall, kürzere Verweilzeiten, höhere Durchsatzgeschwindigkeiten, kaum Diffusionslimitierung in Poren, schnellere Equilibrierung) im Vergleich zu analogen Prozessen mit Partikeln möglich. Solche Affinitätsmembranen können für Stofftrennungen, z.B. Reinigung, vorzugsweise von Proteinen, aber auch vieler anderer Substanzen (z.B. Peptide, Nukleinsäurederivate, Kohlehydrate oder verschiedene Toxine, Herbizide, Pestizide) bis zu Zellen genutzt werden. Auch die Dekontamination von Stoffströmen ist ein Einsatzgebiet für diese Membranen mit vielen Anwendungen. Außerdem ergeben sich für Affinitätsmembranen vielfältige Anwendungsmöglichkeiten in der Analytik, wie z.B. zur hochselektiven Probenanreicherung, z.B. durch Festphasenextraktion), oder in Form einer quantitativen Bestimmung einer Substanz auf einer Affinitätsmembran, z.B. mittels ELISA.

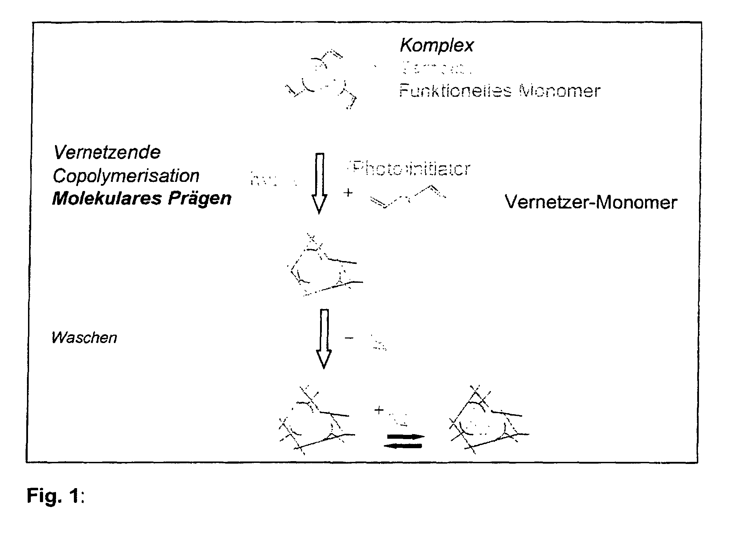

Eine sehr attraktive Alternative zu biologischen oder biomimetischen Affinitäts-Liganden/Rezeptoren für Stofftrennung oder -analytik wurde in den letzten Jahren entwickelt. Dies ist die Nutzung von spezifischen, aber sehr robusten funktionellen Kavitäten ("molekularen Abdrücken") in synthetischen Polymeren, hergestellt durch molekular prägende Polymerisation (G. Wulff, Angew. Chem. 107, 1995, 1958; A.G. Mayes, K. Mosbach, Trends Anal. Chem. 16, 1997, 321; K. Haupt, K. Mosbach, Trends Biotechnol. 16, 1998, 468). Dazu realisiert man eine Polymerisation von Monomeren in Gegenwart von Templatmolekülen (z.B. Protein, Nukleinsäure, niedermolekulare organische Substanz), die mit einem funktionellen Monomer einen während der Polymerisation relativ stabilen Komplex bilden können. Nach dem Auswaschen des Templates können die so hergestellten Materialien Templatmoleküle wieder spezifisch binden. Die so synthetisierten Polymere heißen Templat-geprägte (TGP) oder molekular geprägte Polymere (s. Fig. 1).

Jede Substanz mit definierter dreidimensionaler Gestalt kann als Templat für die Synthese von TGP genutzt werden. Substanzklassen reichen folglich von kleinen Molekülen bis zu Partikeln wie Viren, Bakterien oder Zellen. Verbindungen mit biologischer Funktion wie Peptide, Nukleinsäuren oder Kohlehydrate sind von besonders großem Interesse. Die Erkennung von Templaten durch TGP basiert auf der Kombination verschiedener Faktoren wie reversibler kovalenter oder nichtkovalenter Bindung, elektrostatischer und hydrophober Wechselwirkungen, Wasserstoffbrückenbindung sowie der Komplementarität der Gestalt. Welcher dieser Faktoren dominiert, ist von Templatstruktur und -eigenschaften, dem funktionellen Monomer, der Polymerstruktur, sowie den Bindungsbedingungen abhängig. Im Unterschied zum kovalenten Ansatz zur TGP-Synthese, der aufwendige Synthesen von Templat/Monomer-Konjugaten erfordert, ist der nichtkovalente Ansatz sehr viel flexibler. In hydrophoben Lösungsmitteln sind elektrostatische Wechselwirkungen oft für die Templaterkennung durch TGP geeignet. Dagegen sind in polaren Lösungsmitteln die Gestaltspezifität sowie u.U. hydrophobe Wechselwirkungen am wichtigsten für die Templaterkennung. Vorzugsweise sollten TGP unter Bedingungen synthetisiert werden, die starke, aber reversible Wechselwirkungen zwischen dem Polymer und dem Templat favorisieren. Für große Moleküle (ca. 200 - 1.000.000 Da) kann dagegen auch eine Kombination von vielen schwächeren Bindungen unter Einbeziehung von Wasserstoffbrücken und hydrophobe Wechselwirkungen günstig sein. Für kleine Moleküle (50 - 200 Da) sind wenige starke Wechselwirkungen wie z.B. ionische Bindungen notwendig, um TGP mit hoher Affinität zu erhalten. Auf diese Weise sind z.B. die Herstellung polymerer Sorbentien in Gegenwart kleiner organischer Moleküle (US 5,110,833) bzw. makromolekularer Substanzen (US 5,372,719) oder die Synthese von Acrylamid- bzw. Agarosegelen in Gegenwart von Proteinen beschrieben worden (US 5,728,296, US 5,756,717). Über peptid- bzw. proteinspezifische Sorbentien, hergestellt durch "Oberflächenprägen" von Metallchelatstrukturen auf speziell funktionalisierten Partikeln (US 5786428) oder von Kohlehydraten in einer plasmapolymerisierten Schicht wurde ebenfalls berichtet. Auch TGP-Membranen durch ein spezielles Verfahren zum "Oberflächenprägen" wurden beschrieben (WO 00/07702). Eine signifikante Verbesserung der Synthese von TGPs aus wäßrigen Lösungen sowie für Anwendungen in wäßrigen Systemen wurde durch ein spezielles Verfahren zum "Oberflächenprägen" aus speziellen wäßrigen Reaktionslösungen erzielt. In allen Fällen wurden gute Affinitäten für die jeweiligen Template erhalten.

In Journal of Membrane Science Bd. 157, Nr. 2 (1999), S. 263-278, XP004222951, ISSN 0376-7388 beschreiben Piletsky S.A. et al. TGP, welche mittels Photo-Copolymerisierung direkt auf einem Träger, der gegebenenfalls auch die Reaktionslösung aufnehmen kann, erzeugt werden. Dabei kann eine primäre Absorption eines Initiators erfolgen ("photo-initiated graftcopolymerisation")

Bekannt sind auch TGP, die direkt auf einem speziellen Matrixmaterial erzeugt werden (Hong Ying Wang et al. in J. Chem. Tech. Biotechnol. Bd. 70, (1997), S. 355-362, XP002935306). Dieses spezielle Matrixmaterial enthält bereits Initiatorgruppen kovalent gebunden.

Unspezifische Bindungen zu unterschiedlichen Substanzen beeinträchtigen jedoch die Selektivität/Spezifität dieser Materialien.

Die Anwendung von künstlichen Antikörpern und Rezeptoren, die durch molekulares Prägen hergestellt wurden, könnte sehr große Vorteile haben, weil diese Strukturen viel stabiler als ihre natürlichen Analoga sind. Außerdem können sie prinzipiell für jede Substanz (selbst für solche mit wenig ausgeprägten Antigen-Eigenschaften, wie z.B. kleine Moleküle oder Immunodepressiva) synthetisiert sowie wesentlich einfacher und kostengünstiger als die entsprechenden Biomoleküle hergestellt werden.

Ein wesentliches Problem, das die Anwendungsmöglichkeiten von TGP noch immer deutlich einschränkt, besteht darin, daß neben der gewünschten, durch die TGP-Synthese erzielten Affinität der "molekularen Abdrücke" in großem Ausmaß auch noch unspezifische Wechselwirkungen auftreten. In den wenigen Beispielen, wo für TGP als "Plastik-Antikörper" in Assays über eine bemerkenswerte Templatselektivität (relativ geringe "Kreuzreaktivität" gegenüber ähnlichen Substanzen) berichtet wird, werden nur sehr wenige Templatabdrücke im TGP und damit diejenigen mit der höchsten Affinität genutzt (K. Haupt, K. Mosbach, Trends Biotechnol. 16, 1998, 468). Generell, trotz der Spezifität der TGP für das Templat im Vergleich zu Kontrollpolymeren, die ohne Templat hergestellt wurden, binden auch letztere das Templat, wenn auch in geringerem Ausmaß. Die Selektivität der Bindung des Templates im Vergleich zu strukturell ähnlichen oder verschiedenen anderen Substanzen ist folglich nur beschränkt.
Der Erfindung liegt deshalb die Aufgabe zugrunde, Templat-geprägte Materialien mit guter Affinität, hoher Bindungsspezifität und Selektivität für das Templat zu entwickeln und ein Verfahren zur Herstellung dieser Materialien bereitzustellen.

Die Aufgabe der Erfindung wird durch ein Verfahren zur Herstellung eines Templat-geprägten Materials durch Synthese eines Templat-geprägten Polymers (TGP) durch die an sich bekannte vernetzende Polymerisation funktioneller Monomere in Gegenwart eines Templats auf einem Träger gelöst, wobei erfindungsgemäß ein Träger, der auf der Oberfläche eine dünne Polymerschicht, welche eine unspezifische Bindung von Templat, Templatderivaten und anderen Substanzen minimiert, aufweist, mit dem Reaktionsgemisch, bestehend aus Polymerisationsinitiator, Templat, funktionellem Monomer, Vernetzer, Lösungsmittel und/oder Puffer, versetzt wird, nach Sorption des Reaktionsgemisches in der dünnen Polymerschicht die Polymerisation gestartet und bis zum Erreichen der Aufnahmekapazität der dünnen Polymerschicht für das Templat-geprägte Polymer (TGP) geführt wird, und das Templat in einem letzten Schritt entfernt wird, wobei der eingesetzte Träger so gewählt wird, daß er die Reaktionslösung nicht aufnehmen kann.

Erfindungsgemäß wird also ein Träger eingesetzt, der z.B. vorher mit einer dünnen Polymerschicht oberflächenmodifiziert wurde, die die unspezifische Bindung von Substanzen, z.B. dem Templat, minimiert. Es ist auch möglich, daß während der Synthese des Trägers diese Polymerschicht aufgebracht und damit die erfindunsgemäße Zweischichtstruktur des Trägers erhalten wird.
Erfindungsgemäß können die eingesetzten Träger die zur Polymerisation benötigte Reaktionslösung nicht aufnehmen, während diese Reaktionslösung von der dünnen Polymerschicht auf dem Träger absorbiert wird und in dieser die Polymerisation stattfindet.
In einer bevorzugten Ausführungsform der Erfindung werden als Träger Formköper aus einem hydrophoben Material eingesetzt, während die auf dem Träger befindliche dünne Polymerschicht hydrophiler Natur ist.

In dieser dünnen Polymerschicht wird die TGP-Synthese durch eine vernetzende Polymerisation der funktionellen Monomere in Gegenwart des Templates in wäßrigen oder organischen Reaktionslösungen zu stabilen Templatabdrücken initiiert und so diese dünne Polymerschicht als Matrix für die TGP-Synthese genutzt, wobei überraschenderweise eine bislang unerreichte Kombination von TGP-Spezifität und Selektivität mit minimaler unspezifischer Bindung erhalten wird. Anschließend können die synthetischen Rezeptorstrukturen in Form von Templatabdrücken Templatmoleküle oder Templatderivate aus organischen oder wäßrigen, salzhaltigen Lösungen hoch-spezifisch binden. Dadurch wird die Verwendung der TGP-Materialien für substanzspezifische Verfahren der Affinitätstrennung und -analytik möglich.

In einer weiteren Ausführungsform der Erfindung werden als Träger stark vernetzte organische Polymere oder anorganische Festkörper eingesetzt, die weder eine hydrophile bzw. wässrige noch eine hydrophobe Reaktionslösung aufnehmen können, und wobei die auf dem Träger befindliche dünne Polymerschicht sowohl hydrophiler als auch hydrophober Natur sein kann.

Die erfindungsgemäßen neuartigen Templat-geprägten Materialien bestehen also aus TGP mit hoher Bindungsspezifität und Selektivität auf einem festen Träger. Durch eine vorherige zusätzliche Funktionalisierung oder Beschichtung dieses Trägers mit einer dünner Polymerschicht an der Oberfläche wird die unspezifische Bindung von mit Templat konkurrierenden Substanzen und Nicht-Templaten minimiert, gleichzeitig dient diese dünne Polymerschicht als Matrix für die synthetischen Rezeptorstrukturen (Templatabdrücke).

Erfindungsgemäß ist in an sich bekannter Weise die Integration der Beschichtung des Trägers mit einer dünnen Polymerschicht, die die unspezifische Bindung minimiert, mit der TGP-Synthese in dieser Polymerschicht auch in einem Verfahrensschritt möglich.

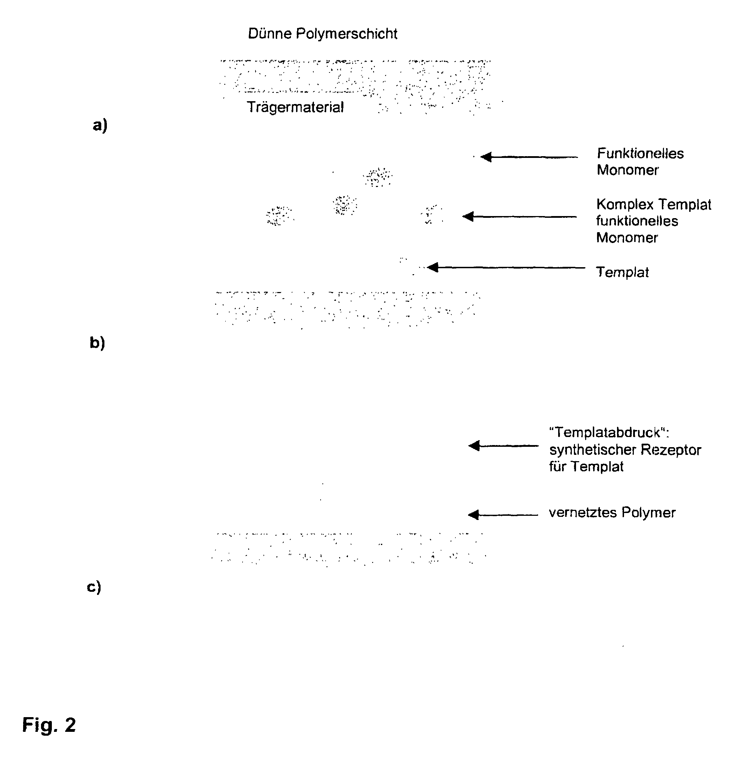

Vorzugsweise erfolgt aber die Herstellung der erfindungsgemäßen Templat-geprägten Materialien auf einem festen Träger variabler Gestalt (Film, Folie, Platte, Reaktionsgefäß, Partikel, Faser, Gewebe, Filter, Membran) mit einer dünnen Polymerschicht, die die unspezifische Bindung des Templates, von Templatderivaten sowie anderer Substanzen minimiert (s. Fig. 2). Die TPG-Synthese führt durch eine selektiv in der dünnen Polymerschicht initiierte, kontrollierte vernetzende Polymerisation in Gegenwart des Templates zu kovalent und/oder durch Einschluß in der dünnen Polymerschicht ("Interpenetrating Network") fixierten TGPs mit Templatabdrücken an der gesamten äußeren Oberfläche des Formkörpers. Nur die funktionellen Gruppen von funktionellen Monomermolekülen, die während der Synthese mit Templat komplexiert waren, sind an der äußeren Oberflächen des TGP-Materials fixiert und gut zugänglich. Ansonsten bestimmt die dünne Polymerschicht mit ihrem geringen unspezifischen Bindungsvermögen die äußere Oberfläche des TGP-Materials; bei ohne Templat synthetisierten Kontrollmaterialien ist es nahezu ausschließlich diese dünne gering bindende Polymerschicht (vgl. Fig. 2). Aufgrund der Selektivität der Initiierung in der dünnen Polymerschicht, bleiben Matrixstruktur und Gestalt des Trägers intakt.

Besonders bevorzugt ist die Herstellung der erfindungsgemäßen Templat-geprägten Materialien auf festen Trägern variabler Gestalt, die durch eine Oberflächenmodifizierung mit einer dünnen Polymerschicht mit minimaler unspezifischer Bindung für das Templat, Templatderivate sowie andere Substanzen funktionalisiert sind. Somit kann eine unabhängige Optimierung von Gestalt bzw. Porenstruktur (Kapazität, Permeabilität) und Oberflächenfunktionalität (hohe Spezifität und Selektivität durch Templatabdrücke bei gleichzeitiger minimaler unspezifischer Bindung) erreicht werden. Die Oberflächenfunktionalisierung von beispielsweise Nano-, Ultra- bzw. Mikrofiltrationsmembranen oder Filtern, bei der nach dem beschriebenen Herstellungsverfahren TGP-Membranen synthetisiert werden, ist dabei ganz besonders bevorzugt. Bei der Filtration durch oder der Applikation der erfindungsgemäßen Materialien können die Template oder Templatderivate auch aus verdünnten Lösungen in den Templatabdrücken mit hoher Spezifität gebunden werden. Dann können die Template oder Templatderivate ggf. gereinigt und anschließend entweder unter Filtrationsbedingungen (als Konzentrat) eluiert oder direkt auf dem Träger analytisch nachgewiesen und quantifiziert werden.

Erfindungsgemäß werden als Template kleine Moleküle bis zu 100 Da (z.B. Triazinherbizide, chemische Wirkstoffe, Hormone oder Aminosäuren), größere Moleküle bis zu 1.000.000 Da (beispielsweise Peptide, Proteine, Nukleinsäuren oder Kohlenhydrate) oder Partikel wie Viren, Bakterien oder Zellen eingesetzt. Besonders bevorzugt sind Template, die zu Wechselwirkungen via Ionenaustausch oder hydrophobe Bindung befähigt sind. Mit der vorliegenden Erfindung können auch in wäßrigen Systemen ionische und elektrostatische Wechselwirkungen sowie Wasserstoffbrückenbindungen zur Synthese von TGP und somit zur molekularen Erkennung genutzt werden. Hydrophobe Wechselwirkungen können einen zusätzlichen Beitrag liefern. Dies ergibt insbesondere für kleine Moleküle signifikante Verbesserungen und ist auch für biologisch relevante Moleküle wie z.B. Aminosäuren, Peptide, Nukleinsäuren, Oligonukleotide oder Mono- und Oligosaccharide, aber auch für Proteine, DNA und RNA oder Polysaccharide bzw. deren Konjugate nutzbar. Die Templatkonzentrationen in der Reaktionsmischung für die Herstellung der erfindungsgemäßen Materialien betragen zwischen 0.01 und 50 %.

Als funktionelle Monomere werden erfindungsgemäß polymerisationsfähige Verbindungen mit zur Wechselwirkung mit Templaten befähigten Gruppen, inbesondere Carboxyl-, Sulfonyl-, Sulfat-, Phosphat-, Amino- oder quartären Ammonium-Gruppen sowie deren Derivate, auch im Gemisch, eingesetzt. Monomere mit positiv oder negativ geladenen funktionellen Gruppen (z.B. aminofunktionelle Acrylat-, Methacrylat- oder Styrenderivate oder Acrylsäure, Methacrylsäure, 2-Acryloylamino-propan-2-sulfonsäure, Vinylsulfonsäure, Styrensulfonsäure bzw. Vinylphosphonsäure) sind für die erfindungsgemäße Herstellung von TGP-Materialien geeignet. Zusätzlich können hydrophobe Einheiten wie z.B. aromatische Ringe, Kryptanden oder Cyclodextrine via spezielle Monomere in TGP eingebaut werden. Zur Komplexbildung befähigte Monomere wie Metallchelatkomplexe, Schiff'sche Basen und spezielle Ester können ebenfalls genutzt werden. Auch Anilin und Anilinderivate mit weiteren funktionellen Gruppen können für die erfindungsgemäße Herstellung von TGP-Materialien genutzt werden. Weiterhin sind z.B. auch Derivate der Phenyl-boronsäure, die mit Diolen Ester bilden können, als funktionelle Monomere geeignet. Letztlich können auch die funktionellen Gruppen in einem Oligomer (z.B. Oligoethylenimin) oder Polymer (z.B. Agarose oder Polyethylenimin) durch Vernetzung im Sinne eines funktionellen Monomers genutzt werden. Die Konzentration funktioneller Monomere in der Reaktionsmischung für die TGP-Synthese kann zwischen 0.01 und 99.99% betragen.

Es ist bekannt, daß die Auswahl der Komponenten für ein Templat-spezifisches TGP vor allem aufgrund der Wechselwirkungen zwischen Templat und funktionellem Monomer (Bildung eines supramolekularen Komplexes) erfolgt. Studium und Quantifizierung der Wechselwirkungen zwischen Templat und funktionellen Monomeren, der Komplexbildung, sind z.B. mit UV-Vis- oder NMR-Spektroskopie möglich. Mit dem Ziel, diese Wechselwirkungen möglichst effektiv und für Affinitätswechselwirkungen zugänglich zu "fixieren", werden zusätzlich geeignete Vernetzer, Lösungsmittel und Initiatoren gewählt.

Beispiele für Vernetzer sind Ethylenglycol-, Diethylenglycol-, Triethylenglycol-, oder Tetraethylenglycolbismethacrylat bzw. weitere analoge Derivate für funktionelle Acrylate, N,N-Methylenbisacrylamid oder Piperazinbisacrylamid für funktionelle Acrylamide bzw. Methacrylamide, o-Phenylendiamin für funktionelle Anilinderivate, oder Bisepoxide für Agarose. Die Vernetzerkonzentrationen in der Monomermischung betragen zwischen 0 und 90%.

Die Lösungsmittel für die Polymerherstellung können das Monomer selbst, Wasser, wässrige Pufferlösungen, organische Lösungsmittel oder deren Mischungen sein. Generell hängt der optimale Monomertyp natürlich von der Templatstruktur sowie den Polymerisationsbedingungen ab.

Als Polymerisationsinitiator sind Verbindungen geeignet, die (wie z.B. Peroxide, Azoverbindungen) nach Anregung entweder unter Bindungsspaltung oder die (wie z.B. H-Abstraktoren) durch bimolekulare Reaktion mit anderen Molekülen / Strukturen Radikale erzeugen, die eine Polymerisation starten können. Besonders geeignet sind Photoinitiatoren, wie z.B. Benzophenon und -derivate. In Abhängigkeit von den Polymerisationsbedingungen sowie der Zusammensetzung können die geprägten Polymere in der gewünschten Dichte, Porosität, Vernetzungsdichte und Konsistenz hergestellt werden. Diese Vorgehensweise ist dem Fachmann bekannt.

Eine Vielzahl verschiedener Trägerformen wie Filme, Folien, Platten, Reaktionsgefäße, Mikrotiterplatten, (Mikro- und Nano-) Partikel, Fasern, Hohlfasern, Gewebe, Vliese, Filter oder Membranen aus unterschiedlichen organischen oder anorganischen Materialien kann für die erfindungsgemäße Herstellung Templat-geprägter Materialien verwendet werden. Organische Materialien sind Polymere wie z.B. Polypropylen, Polyethylen, Polystyren, Polysulfon, Polyamide, Polyester, Polycarbonat, Polyacrylnitril, Polyvinylidenfluorid, Polytetrafluoroethylen, Polyacrylate, Polyacrylamide, Cellulose, Amylose, Agarose sowie deren Derivate, Copolymere oder Blends. Anorganische Materialien sind z.B. Gläser, Silikate, Keramiken oder Metalle bzw. deren Komposite, auch mit organischen Polymeren. Die Träger können porenfrei oder poröse sein. Besonders bevorzugt im Hinblick auf Herstellung und Verwendung der neuen templat-geprägten Materialien sind Träger in Form polymerer Membranen, die durch Verfahren wie Fällungsmittel- oder Temperatur-induzierte Phaseninversion in einer Vielzahl von Porenstrukturen sowie mit den gewünschten mechanischen etc. Eigenschaften hergestellt werden können. Die Membranen weisen vorzugsweise symmetrische, aber auch asymmetrische Porenstrukturen und Porengrößen zwischen wenigen nm und 10 µm, bevorzugt 100 nm bis 5 µm auf. Damit ist eine Auswahl optimaler poröser Matrixmembranen (Träger) für die gewünschten Trenn- oder Analysenprozesse möglich. Erfindungsgemäß besonders bevorzugt sind aber Membranen (Träger) mit einer dünnen Polymerschicht auf der Oberfläche. Diese sind entweder kommerziell verfügbar (z.B. hydrophylierte PVDF-Membranen) oder nach prinzipiell bekannten Verfahren herstellbar (z.B. US 4,618,533).

Die erfindungsgemäße Herstellung der Templat-geprägten Materialien erfolgt mit einem Reaktionsgemisch, das zumindest Initiator, Templat und funktionelles Monomer enthält. Die Reaktion verläuft unter Erhalt des Komplexes aus Templat und funktionellem Monomer, womit die fundamentale Voraussetzung für die Bildung von synthetischen Rezeptoren (Templatabdrücken) gegeben ist. Stabilität als auch die Porenstruktur des Trägers werden erfindungsgemäß nicht beeinträchtigt.

Durch die Wahl der Polymerschicht auf dem Träger können neben einer hohen Affinität der Templatabdrücke auch die unspezifischen Wechselwirkungen von strukturell ähnlichen oder verschiedenen Substanzen mit dem TGP minimiert werden. Damit werden sowohl die Spezifität des TGP im Vergleich zur Kontrolle als auch die Selektivität des TGP für das Templat im Vergleich zu anderen Substanzen signifikant erhöht (vgl. Fig. 2).

Folgendes Herstellungsverfahren ist für die Synthese der erfindungsgemäßen TGP-Materialien mit hoher Bindungsspezifität und Selektivität besonders geeignet:
1.
   a) Auswahl eines Trägers mit einer dünnen Polymerschicht an der Oberfläche, die die unspezifische Bindung von Substanzen, z.B. Templat, am Träger minimiert, oder
   b) Herstellung eines Trägers (während der Synthese bzw. der Verarbeitung des Trägermaterials oder durch Oberflächenmodifizierung des Trägers) mit einer dünnen Polymerschicht an der Oberfläche, die unspezifische Bindung von Substanzen, z.B. Templat, am Träger minimiert,
2. Beschichtung des Trägers mit der Hauptmenge des Polymerisationsinitiators - Anreicherung des Initiators in der dünnen Polymerschicht,
3. Beschichtung des Trägers mit dem Reaktionsgemisch (Templat, Funktionelles Monomer, Vernetzer, Lösungsmittel und/oder Puffer, Restmenge an Initiator) - Sorption in der dünnen Polymerschicht,
4. Initierung der Polymerisation und Führung bis zum Erreichen der Aufnahmekapazität der dünnen Polymerschicht - bevorzugte Erzeugung von Startradikalen und Polymerisation in der dünnen Polymerschicht,
5. Extraktion von unumgesetzten Reaktanden, löslichem Homopolymer und Templat.

In einer anderen Ausführugnsform der Erfindung kann der Polymerisationsinitiator im Schritt 2 auch vollständig zugegeben werden.

Als Initiator wird eine Substanz eingesetzt, die nach physikalischer oder chemischer Anregung Radikale oder andere Starterspezies für eine Polymerisation erzeugt. Die Funktionalisierungen können auf der Wirkung der dünnen Polymerschicht als Coinitiator basieren, d.h. alle Polymere, aus denen sich durch Initiatoren Radikale oder andere Spezies generieren lassen, die eine Pfropfcopolymerisation starten können, lassen sich auf diese Weise modifizieren.

Eine photochemische Initiierung einer heterogenen Pfropfcopolymerisation (z.B. funktioneller Acrylate) ist zur erfindungsgemäßen Herstellung Templat-geprägter Materialien besonders bevorzugt. Dies erfolgt durch Verwendung eines Photoinitiators, insbesondere vom H-Abstraktionstyp, sowie selektiver UV-Belichtung des Photoinitiators in Schritt 4. Dabei kann die Polymerisation bei für die TGP-Synthese besonders günstigen, niedrigen Temperaturen (T ≤ 25°C) stattfinden, wo der supramolekulare Komplex zwischen Templat und funktionellem Monomer wenig gestört wird.

Auch eine gezielt initiierte chemische Pfropfung bzw. Vernetzung von Polymeren (z.B. Synthese von Polyanilinderivaten) auf dem Träger mit der dünnen Polymerschicht ist zur erfindungsgemäßen Herstellung Templat-geprägter Materialien geeignet. Auch die Synthese eines "Interpenetrating Network", durch gezielt initiierte Polymerisation des TGP in der dünnen Polymerschicht und Verankerung durch gegenseitige Durchdringung und/oder Verschlaufung ohne chemische Reaktion zwischen beiden Polymeren, kann zu TGP mit hoher Spezifität und Selektivität führen.

Es ist bekannt, daß die TGP-Synthesen durch Oberflächenfunktionalisierung aus wäßrigen oder organischen Lösungsmitteln möglich sind. Über Initiierungs- und Polymerisationsbedingungen lassen sich Funktionalisierungsgrad und damit Oberflächenbedeckung des Trägers mit TGP steuern. Falls erforderlich, kann so auch eine Blockierung der Trägerporen minimiert werden. Durch die Vielzahl der Varianten ist die Anwendung des für die TGP-Synthese etablierten Methodenarsenals auch auf die Oberflächenfunktionalisierung der erfindungsgemäß eingesetzten speziellen Trägermaterialien möglich.

Bei der Herstellung von TGP läßt sich durch den Zusatz von Salz zur Reaktionslösung (in Schritt 3), z.B. als Puffer, die Bindungsspezifität und -kapazität des Templat-geprägten Polymers für das Templat erhöhen.

Um das Templat wieder aus dem TGP herauszuwaschen, können z.B. eine Säure, die die elektrostatischen Wechselwirkungen stört, eine Salzlösung mit einer zur Dissoziation ausreichenden Ionenstärke oder ein Lösungsmittel mit anderer Polarität verwendet werden. Dadurch werden in den Poren oder/und an der Oberfläche des erfindungsgemäßen Materials die zur Templatstruktur komplementären Bindungsstellen wieder freigesetzt.

Die Charakterisierung der Eigenschaften der erfindungsgemäßen Materialien erfolgt in prinzipiell bekannter Weise mit etablierten Verfahren, z.B. durch REM-Untersuchungen, Messungen der spezifischen Oberfläche (BET-Isotherme), FTIR-ATR-Spektroskopie, Funktionalgruppenanalytik mit photometrischen oder fluorimetrischen Methoden, Kontaktwinkelmessungen, sowie Permeabilitätsmessungen.

Die Charakterisierung der Eigenschaften der erfindungsgemäßen Materialien erfolgt in prinzipiell bekannter Weise durch statische und dynamische Sorptionsexperimente mit dem Templat oder anderen strukturell ähnlichen bzw. verschiedenen Substanzen. Insbesondere die Bindungskapazitäten der erfindungsgemäßen Materialien für das Templat, in Abhängigkeit von TGP-Struktur des Materials und den Testbedingungen (Konzentration, Verweilzeit, applizierte Stoffmengen und Volumen, Spülbedingungen; insbesondere auch in Mischungen mit anderen Substanzen) sind wesentlich im Hinblick auf die vielfältigen Anwendungen der erfindungsgemäßen Materialien.

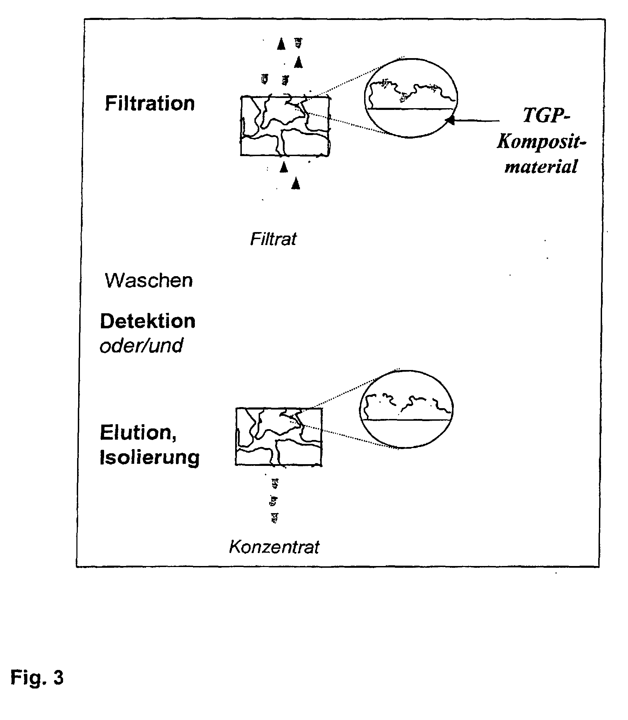

Template werden bei der Applikation auf oder der Filtration durch Templat-geprägte Materialien der Erfindung, auch aus hoher Verdünnung, in den Templatabdrücken mit hoher Spezifität gebunden. Dann können die Template durch Waschen gereinigt und anschließend entweder direkt auf dem Träger nachgewiesen oder unter Filtrationsbedingungen (als Konzentrat) eluiert werden (s. **Fig. 3**). Mit den erfindungsgemäßen TGP-Materialien mit hoher Bindungsspezifität und Selektivität sind also effektive substanz-spezifische Stofftrennungen oder/und analytische Bestimmungen aus organischen oder wäßrigen Lösungen möglich.

Gegenstand der Erfindung sind auch die mit dem erfindungsgemäßen Verfahren hergestellten Templat-geprägten Materialien sowie deren Verwendung.

Die erfindungsgemäße Verwendung der neuartigen Templat-geprägten Materialien liegt in der Stofftrennung und/oder Analytik von flüssigen oder gasförmigen Stoffgemischen, die auf der spezifischen Bindung der Template bei der Perfusion oder Diffusion durch Templat-geprägte Polymere oder der Applikation auf Templat-geprägten Polymeren basieren.

Folgende Anwendungen ergeben sich für die erfindungsgemäßen TGP-Materialien, ohne daß damit die Anwendungsmöglichkeiten auf die konkreten Fälle beschränkt werden sollen:
1. Trennung: Anwendung in Festphasenextraktion, Chromatographie, Elektrophorese, Membrantrennung oder kontrollierter Wirkstoffreisetzung - Filtration (Perfusion) bzw. Affinitätsfiltration, Diffusion (Dialyse) oder Elektrodiffusion (Elektrodialyse) von Lösungen oder gasförmige Gemischen durch die erfindungsgemäßen Templat-geprägten Materialien bzw. Sorption an diese zur Aufkonzentrierung, Reinigung, Abtrennung oder anschließenden analytischen Bestimmung von Substanzen,
2. Analytik: Anwendung als Teststreifen, Blottingmembran oder sensitive Schicht für Assays in Reaktionsgefäßen bzw. Mikrotiterplatten (z.B. qualitative oder quantitative Bestimmungen oder Wirkstoffsuche/-screening) - Applikation von Lösungen oder gasförmigen Gemischen auf TGP-Materialien oder Sorption an TGP-Materialien,
3. Sensorik: Anwendung als Rezeptor oder/und Transducer; Anwendung zur, ggf. kontinuierlichen, analytischen Bestimmung von Substanzen,
4. Katalyse: Anwendung von TGP als Rezeptor und/oder katalytisch aktives Zentrum; Anwendung zur Synthese, Reinigung, Abtrennung oder analytischen Bestimmung von Substanzen.

Für o.g. Anwendungen reichen die geeigneten Substanzklassen von kleinen Molekülen bis zu 100 Da (z.B. Triazinherbizide oder Hormone) bis zu Partikeln wie Viren, Bakterien oder Zellen. Insbesondere sind dies biologisch relevante Moleküle (Wirkstoffe) wie Aminosäuren, Peptide, Nukleinsäuren, Oligonukleotide oder Mono- und Oligosaccharide, aber auch für Proteine, DNA und RNA oder Polysaccharide bzw. deren Konjugate.

Die erfindungsgemäßen Materialien haben den Vorteil, daß sie durch eine Kombination von guter Affinität, hoher Spezifität und Selektivität sowie geringer unspezifischer Bindung neue hocheffektive Verfahren zur substanzspezifischen Stofftrennung und -analytik ermöglichen. Insbesondere ist auch die Herstellung der erfindungsgemäßen TGP-Materialien aus wäßrigen Reaktionsmischungen möglich. Damit ist das erfindungsgemäße Verfahren auch auf Biomoleküle unter Erhalt ihrer Aktivität anwendbar. Damit können die neuen TGP-Materialien auch für die Stofftrennung und -analytik aus/in wäßrigen Lösungen, und somit insbesondere in LifeScience und Biotechnologie, angewendet werden.

Die Erfindung soll anhand von Ausführungsbeispielen und Figuren näher erläutert werden, ohne sie darauf einzuschränken.

### Ausführungsbeispiele

### Beispiel 1. Für Terbumeton (2-t-Butylamino-4-ethyl-6-methoxy-1,3,5-triazin) templat-geprägte Polyvinylidenfluorid-Membranen

### a) Variation des funktionellen Monomers

Runde Proben (4.9 cm²) hydrophilierter PVDF-Membranen (Porengröße 0.22 µm; "hydrophilisierte Durapore"; Millipore GmbH, Eschborn) werden mit Aceton und Methanol extrahiert, getrocknet und gewogen. Danach werden sie für 5 min in eine 150 mM Lösung von BP (Photoinitiator) in Aceton getaucht und danach im Vakuum getrocknet. Anschließend werden die Membranen in Petrischalen mit der Reaktionslösung, bestehend aus 10 mM Terbumeton (Templat; PESTANAL; Riedel de Haën GmbH&CoKG, Seelze), 50 mM AA, MAA bzw. AMPS (funktionelles Monomer; Sigma-Aldrich), 300 mM MBAA (Vernetzer; Sigma-Aldrich) und 5 mM BP in Methanol, überschichtet. Die Petrischale wird mit einer Glasplatte (Tief-UV-Filter, λ > 310 nm) abgedeckt. Nach 10 min erfolgt die Belichtung an einem UV-Trockner (Beltron GmbH) bei Halblast für insgesamt 10 min (10 Passagen durch die Belichtungszone). Anschließend werden die Membranen intensiv für 2 h im Soxhlet extrahiert, sowie mit Wasser, 50 mM Salzsäure, Wasser und wieder Methanol gewaschen. Danach wird getrocknet und gravimetrisch der Modifizierungsgrad (DG, bezogen auf die äußere Membranoberfläche) bestimmt.
Präparationen unter o.g. Bedingungen werden auch mit nicht hydrophilierten PVDF-Membranen (Porengröße 0.22 µm; "hydrophobe Durapore"; Millipore GmbH, Eschborn) durchgeführt.

### b) Variation der Konzentration des funktionellen Monomers

Die Präparation erfolgt wie oben beschrieben, jedoch mit Reaktionslösungen, bestehend aus 10 mM Terbumeton, 0 bis 60 mM AMPS, 300 mM MBAA und 5 mM BP in Methanol.

### c) Variation der Konzentration des Vernetzers

Die Präparation erfolgt wie oben beschrieben, jedoch mit Reaktionslösungen, bestehend aus 10 mM Terbumeton, 50 mM AMPS, 200 bis 350 mM MBAA und 5 mM BP in Methanol.
Nicht templat-geprägte Kontrollproben werden jeweils nach analoger Vorschrift wie für die TGP-Membranen, aber ohne Templat, präpariert. Alle Ergebnisse sind in Tabelle 1 zusammengefaßt.

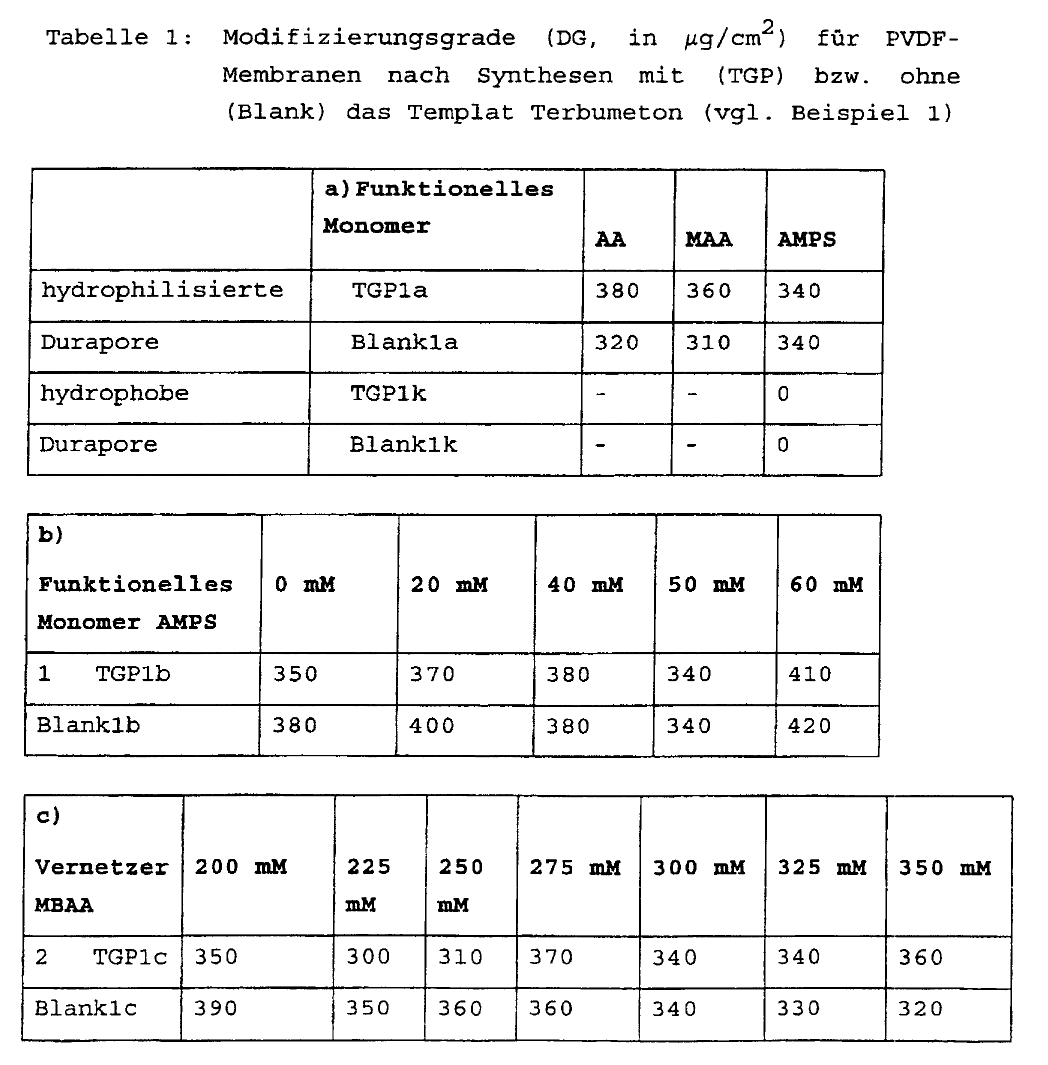

Für TGP- und Blank-Materialien werden unter analogen Bedingungen jeweils ähnliche DG-Werte erhalten. Ein signifikanter Anstieg wird für TGP1b und Blanklb ab 60 mM AMPS beobachtet, was auf eine Modifizierung über die Kapazität der dünnen hydrophilen Polymerschicht hinaus hinweist (vgl. Fig. 2). Strukturuntersuchungen mit REM, BET, ATR-IR sowie Funktionalgruppenassays belegen die Modifizierung mit einer dünnen funktionellen Polyacrylatschicht; Unterschiede in der Zusammensetzung zwischen TGP- und Blank-Materialien sind nicht nachweisbar.

### Beispiel 2. Anwendung von für Terbumeton templat-geprägten Polyvinylidenfluorid-Membranen zur substanz-spezifischen Membran-Festphasenextraktion

Runde Proben (4.9 cm²) entsprechend Beispiel 1 modifizierter Membranen werden in einen Filterhalter aus Stahl mit Luer-Lock-Anschluß (effektive Membranfläche 3.8 cm²; Schleicher & Schuell GmbH, Dassel) montiert. 10 ml einer 10⁻⁵ M Lösung des Herbizids (Terbumeton, Atrazin, Desmetryn oder Terbutylazin, Metribuzin; PESTANAL; Riedel de Haën GmbH&CoKG, Seelze) in Wasser werden aus einer Spritze mit einer Geschwindigkeit von 10 ml/min quantitativ durch die Membran filtriert. Anschließend werden sowohl das Filtrat als auch 10 ml der Rohlösung mit jeweils 10 ml Chloroform extrahiert. Die beiden Herbizidkonzentrationen werden dann mit Hilfe der Gaschromatographie (Trennsäule HP5MS; Hewlet Packard GC System HP 6890 mit Masse-selektivem Detektor HP 5973) quantitativ bestimmt; aus den Konzentrationen von Rohlösung und Filtrat wird die in der Membran gebundene Menge errechnet.

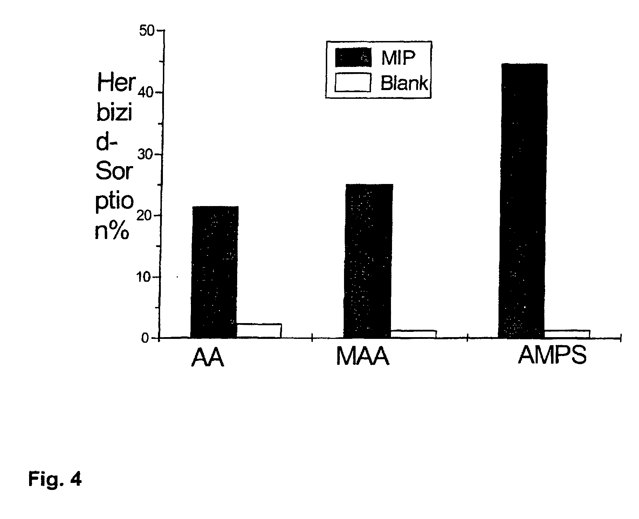

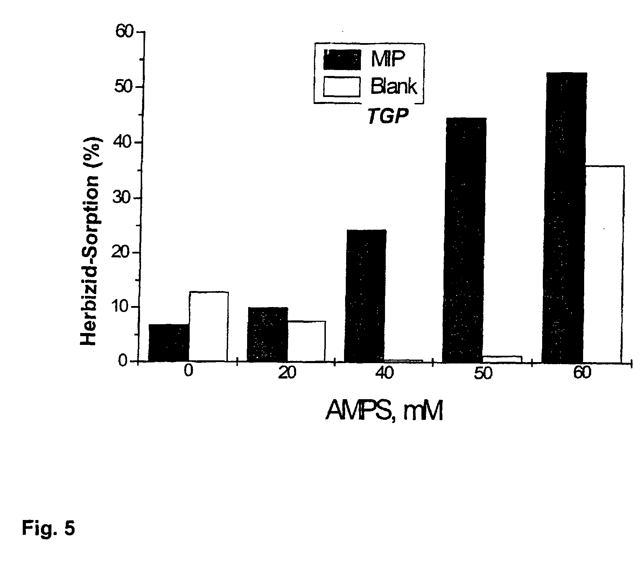

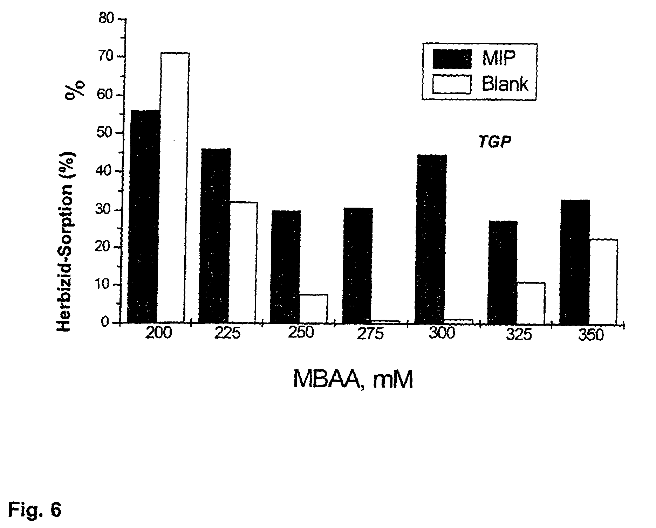

Zusammenfassungen der Ergebnisse geben **Fig. 4** für die Variation des funktionellen Monomers (s. Beispiel la)), Fig. 5 für die Variation der Konzentration des funktionellen Monomers (s. Beispiel 1b)) sowie Fig. 6 für die Variation der Konzentration des Vernetzers (s. Beispiel 1c)) Bei geringen Absolutwerten für die unspezifische Bindung ("Hintergrund"; < 2 µmol/cm²) sind die Sorptionswerte für TGP- deutlich höher als für die entsprechenden Blank-Materialien; AMPS als das funktionelle Monomer mit der, im Vergleich zu AA und MAA, intensivsten Komplexbildung mit dem Templat ergibt TGP mit der höchsten Affinität (s. Fig. 4). Bei relativ geringen Absolutwerten für die unspezifische Bindung ("Hintergrund"; < 5 µmol/cm²) sind die Sorptionswerte für TGP- Materialien erst bei einer AMPS-Konzentration von 40 mM deutlich höher als die für die entsprechenden Blank-Materialien; zu hohe AMPS-Konzentrationen führen zu zu hohen DG-Werten (vgl. Tabelle 1b) und damit einem zu deutlichen Anstieg der unspezifischen Sorption (s. Fig. 5). Nur bei einer optimalen Vernetzerkonzentration werden mit dem funktionellen (Kationenaustauscher-) Monomer AMPS geringe Absolutwerte für die unspezifische Bindung ("Hintergrund"; < 5 µmol/cm²) sowie höhere Sorptionswerte für TGP--im Vergleich zu entsprechenden Blank-Materialien erhalten (s. Fig. 6).

### Beispiel 3. Für Desmetryn (2-Isopropylamino-4-methylamino-6-methylthio-1,3,5-triazin) templat-geprägte Polyvinylidenfluorid-Membranen

Eine runde Probe (46 cm²) einer hydrophilierten PVDF-Membran (vgl. Beispiel 1) wird mit Chloroform und Methanol extrahiert, getrocknet und gewogen. Danach wird die Membran für 30 min in eine 100 mM Lösung von BP in Methanol getaucht. Anschließend wird die Membran, deren Poren noch mit der BP-Lösung gefüllt sind, in einer Petrischale (d = 10 cm) mit 20 ml Reaktionslösung, bestehend aus 10 mM Desmetryn (Templat), 50 mM AMPS (funktionelles Monomer), 100 mM MBAA (Vernetzer) und 0.1 mM BP in Wasser, überschichtet. Die Petrischale wird mit einer Glasplatte (Ti.ef-UV-Filter, λ > 310 nm) abgedeckt. Nach 30 min erfolgt die Belichtung an einem UV-Trockner (Beltron GmbH) bei Halblast für insgesamt 10 min (10 Passagen durch die Belichtungszone). Anschließend wird die Membran intensiv mit Methanol, Wasser, 50 mM Salzsäure, Wasser und wieder Methanol gewaschen. Danach wird getrocknet und gravimetrisch der Modifizierungsgrad (DG, bezogen auf die äußere Membranoberfläche) bestimmt. Nicht templat-geprägte Kontrollproben werden nach analoger Vorschrift, aber ohne Templat, präpariert. Ergebnisse für nach o.g. allgemeiner Vorschrift variierte Präparationsbedingungen zeigt Tabelle 2.

TGP- und Blank-Materialien lassen sich auch aus wäßrigen Lösungen synthetisieren, es werden unter analogenBedingungen jeweils ähnliche DG-Werte erhalten.

### Beispiel 4. Anwendung von für Desmetryn templat-geprägten Polyvinylidenfluorid-Membranen zur substanzspezifischen Membran-Festphasenextraktion

Runde Proben (4.9 cm²) entsprechend Beispiel 3 modifizierter Membranen werden in einen Filterhalter aus Stahl mit Luer-Lock-Anschluß (effektive Membranfläche 3.8 cm²; Schleicher & Schuell GmbH, Dassel) montiert. 10 ml einer 10⁻⁵ M Lösung des Herbizids (Desmetryn) in Wasser bzw. 50 mM Natriumphosphatpuffer (pH = 5.0) werden aus einer Spritze mit einer Geschwindigkeit von 10 ml/min quantitativ durch die Membran filtriert. Anschließend werden sowohl das Filtrat als auch 10 ml der Rohlösung mit jeweils 10 ml Chloroform extrahiert. Die beiden Herbizidkonzentrationen werden dann mit Hilfe der Gaschromatographie (Trennsäule HP5MS; Hewlet Packard GC System HP 6890 mit Masse-selektivem Detektor HP 5973) quantitativ bestimmt; aus den Konzentrationen von Rohlösung und Filtrat wird die in der Membran gebundene Menge errechnet. Dabei werden die in Tabelle 2 dargestellten Werte für die Herbizidsorption erhalten.

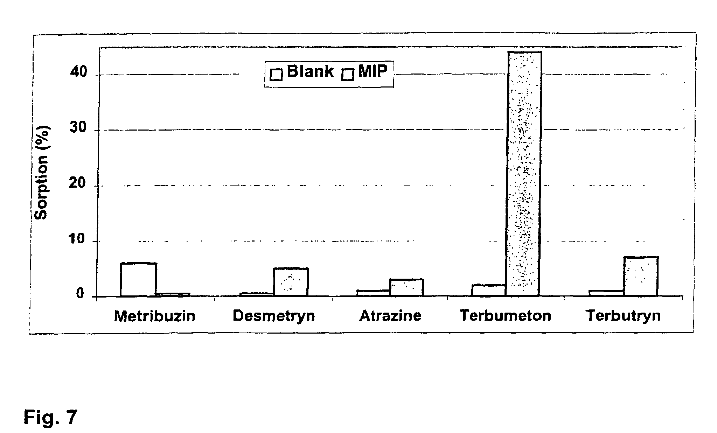

Die Ergebnisse für die Bindung unterschiedlicher Herbizide (s. Fig. 7) zeigen eine bemerkenswerte, verglichen mit dem Stand der Technik unerwartete Substanzspezifität: Nur das TGP-Material zeigt eine signifikante Bindung für eine Triazinherbizid, und diese Bindung wird ausschließlich für das bei der Synthese verwendete Templat Terbumeton und nicht für die strukturell sehr ähnlichen Triazinherbizide Metribuzin, Desmetryn, Atrazin und Terbutryn erhalten.

Bei geringen Absolutwerten für die unspezifische Bindung ("Hintergrund"; < 5 µmol/cm²) sind die Sorptionswerte für TGP- deutlich höher als für die entsprechenden Blank-Materialien. Das gilt besonders auch für die durch pH- und Salz- Variation synthetisierten TGP-Materialien; letztere können dann das Templat auch aus Pufferlösungen spezifisch binden.
Das TGP-gebundene Herbizid kann durch pH-Wechsel oder erhöhte Salzkonzentration wieder aus der Membran eluiert werden. So werden von der Membran TGP 2/1 nach Sorption von Desmetryn aus Wasser (vgl. Tabelle 2) mit 10 ml einer 100 mM Lösung von Natriumchlorid in Wasser 89% wieder eluiert. In analoger Weise kann das Herbizid aus einer 1*10⁻⁹ M Lösung bei einer Sorption von 100% sowie einer Wiederfindung von 90 % 1000fach angereichert werden; d.h. eine substanzspezifische Festphasenextraktion kann sowohl zur Aufreinigung als auch zur Aufkonzentrierung genutzt werden. Die TGP-Membranen sind ohne Verlust an Spezifität und Kapazität nach einer einfachen Regeneration wiederholt einsetzbar.

**Tabelle 2:**

| Modifizierungsgrade (DG; vgl. Beispiel 3) sowie Desmetrynsorption (aus Wasser oder Puffer, pH = 5.0) bei der Filtration (vgl. Beispiel 4) für hydrophilierte PVDF-Membranen nach Synthesen mit (TGP) bzw. ohne (Blank) das Templat Desmetryn | | | | | |
|---|---|---|---|---|---|
| PVDF-h | pH | Reaktionslösung: Salz(mM) | Funktionalisierung DG (µg/ cm²) | Sorption LM | n(µmol/cm²)/% |
| TGP 2/1 | 1.5 | 1 | 305 | Wasser | 17.2/65.4 |
| Blank 2/1 | 1.5 | 1 | 285 | Wasser | 2.0/7.6 |
| TGP 2/1 | 1.5 | 1 | 305 | Puffer | 3.0/11.4 |
| Blank 2/1 | 1.5 | 1 | 285 | Puffer | 3.2/12.2 |
| TGP 2/2 | 1.5 | 50 | 310 | Puffer | 13.9/52.9 |
| Blank 2/2 | 1.5 | 50 | 290 | Puffer | 4.2/16.0 |
| TGP 2/3 | 2.1 | 50 | 320 | Puffer | 9.9/37.6 |
| Blank 2/3 | 2.1 | 50 | 305 | Puffer | 3.8/14.4 |

### Beispiel 5. Herstellung eines Polypropylen-Membran-Trägers mit einer dünnen hydrophilen vernetzten Polymerschicht (PP-h)

Eine PP-Membran (39 cm²; Porengröße 0.2 µm; Accurel PP 2E HF; Akzo-Nobel AG, Wuppertal) wird unter Schütteln für 2 h mit einer 100 mM Lösung von BP in Aceton equilibriert. Die Membran wird aus der Lösung entnommen, und nach Entfernung der außen anhaftenden Lösung sofort in einer Petrischale mit einer Reaktionslösung, bestehend aus 75 g/l 2-Hydroxypropyl methacrylat und 7.5 g/l Tetraethylenglycol bismethacrylat (jeweils Röhm GmbH, Darmstadt) in mit BP gesättigtem Wasser überschichtet. Die Petrischale wird mit einer Glasplatte (Tief-UV-Filter, λ > 310 nm) abgedeckt. Nach 5 min erfolgt die Belichtung an einem UV-Trockner (Beltron GmbH) bei Halblast für insgesamt 10 min (10 Passagen durch die Belichtungszone). Anschließend wird die Membran mit Wasser für 2 h im Soxhlet extrahiert und anschließend mit Aceton und Methanol gewaschen. Danach wird getrocknet und gravimetrisch der Modifizierungsgrad bestimmt: DG (PP-h) = 320 µg/cm². Mit der spezifischen Oberfläche des Membranmaterials (PP) von 17.5 m²/g sowie unter Annahme einer Dichte des Pfropfpolymers von 1 g/cm³ entspricht dieser DG-Wert einer Schichtdicke der hydrophilen, vernetzten Polymerschicht von ca. 10 nm.

Als spezielle Träger für die erfindungsgemäße TGP-Synthese können oberflächenmodifizierte Membranen mit einer dünnen Polymerschicht mit aufgrund der Hydrophilie niedriger unspezifischer Bindung hergestellt werden.

### Beispiel 6. Für Terbumeton templat-geprägte Polypropylen-Membran und Verwendung für Membran-Festphasenextraktion

Eine entsprechend Beispiel 5 modifizierte PP-Membran (39 cm²; PP-h) wird für 5 min in eine 150 mM Lösung von BP in Aceton getaucht und danach im Vakuum getrocknet. Anschließend wird die Membran in einer Petrischale mit der Reaktionslösung, bestehend aus 10 mM Terbumeton (Templat), 50 mM AMPS (funktionelles Monomer), 300 mM MBAA (Vernetzer) und 5 mM BP in Methanol, überschichtet. Die Petrischale wird mit einer Glasplatte (Tief-UV-Filter, λ > 310 nm) abgedeckt. Nach 10 min erfolgt die Belichtung an einem UV-Trockner (Beltron GmbH) bei Halblast für insgesamt 10 min (10 Passagen durch die Belichtungszone). Anschließend wird die Membran intensiv für 2 h im Soxhlet extrahiert, sowie mit Wasser, 50 mM Salzsäure, Wasser und wieder Methanol gewaschen. Danach wird getrocknet und gravimetrisch der Modifizierungsgrad bestimmt (s. Tabelle 3). Eine nicht templat-geprägte Kontrollprobe wird nach analoger Vorschrift, aber ohne Templat, präpariert. Nach der Funktionscharakterisierung wie in Beispiel 2 beschrieben, werden die in Tabelle 3 dargestellten Werte für die Herbizidsorption erhalten.

**Tabelle 3:**

| Modifizierungsgrade (DG) sowie Terbumetonsorption aus Wasser bei der Filtration für hydrophilierte PP-Membranen nach Synthesen mit (TGP) bzw. ohne (Blank) das Templat Terbumeton | | |
|---|---|---|
| PP-h | Funktionalisierung DG (µg/ cm²) | Sorption n (µmol/cm²)/% |
| TGP 3/1 | 345 | 11.1/42.2 |
| Blank 3/1 | 325 | 2.1/8.0 |
| PP, unmodifiziert | - | 22.4/85.0 |

Bei geringen Absolutwerten für die unspezifische Bindung ("Hintergrund"; < 3 µmol/cm²; vgl. "PP, unmodifiziert"), die auf die vorherige Beschichtung mit einer dünnen, vernetzen, hydrophilen Polymerschicht (vgl. Beispiel 5) zurückzuführen ist, sind die Sorptionswerte für TGP- deutlich höher als für die entsprechenden Blank-Materialien.

### Beispiel 7. Für Desmetryn templat-geprägte Polypropylen-Membranen und Verwendung für Membran-Festphasenextraktion

Eine entsprechend Beispiel 5 modifizierte PP-Membran (39 cm²; PP-h) wird für 30 min in eine 100 mM Lösung von BP in Methanol getaucht. Anschließend wird die Membran, deren Poren noch mit der BP-Lösung gefüllt sind, in einer Petrischale (d = 10 cm) mit 20 ml Reaktionslösung, bestehend aus 10 mM Desmetryn (Templat), 50 mM AMPS (funktionelles Monomer), 100 mM MBAA (Vernetzer) und 0.1 mM BP in Wasser, überschichtet. Die Petrischale wird mit einer Glasplatte (Tief-UV-Filter, λ > 310 nm) abgedeckt. Nach 30 min erfolgt die Belichtung an einem UV-Trockner (Beltron GmbH) bei Halblast für insgesamt 10 min (10 Passagen durch die Belichtungszone). Anschließend wird die Membran intensiv mit Methanol, Wasser, 50 mM Salzsäure, Wasser und wieder Methanol gewaschen. Danach wird getrocknet und gravimetrisch der Modifizierungsgrad bestimmt. Eine nicht templat-geprägte Kontrollprobe wird nach analoger Vorschrift, aber ohne Templat, präpariert (s. Tabelle 4). Nach der Funktionscharakterisierung wie in Beispiel 4 beschrieben werden die in Tabelle 4 dargestellten Werte für die Herbizidsorption erhalten.

**Tabelle 4:**

| Modifizierungsgrade (DG) sowie Desmetrynsorption aus Wasser bei der Filtration (vgl. Beispiel 4) für hydrophilierte PP-Membranen nach Synthesen mit (TGP) bzw. ohne (Blank) das Templat Desmetryn | | |
|---|---|---|
| PP-h | Funktionalisierung DG (µg/ cm²) | Sorption n(µmol/cm²)/% |
| TGP 4/1 | 315 | 9.9/37.6 |
| Blank 4/1 | 310 | 1.2/4.6 |
| PP, unmodifiziert | - | 11.6/44.0 |

Bei geringen Absolutwerten für die unspezifische Bindung ("Hintergrund"; < 2 µmol/cm²; vgl. "PP, unmodifiziert"), die auf die vorherige Beschichtung mit einer dünnen, vernetzen, hydrophilen Polymerschicht (vgl. Beispiel 5) zurückzuführen ist, sind auch nach Synthese aus wäßrigen Reaktionsmischungen die Sorptionswerte für TGP- deutlich höher als für die entsprechenden Blank-Materialien.

Die sehr hohe Spezifität der erfindungsgemäßem TGP-Materialien (bei Vergleich zu den Kontrollproben) sowie die sehr hohe Templat-Selektivität (im Verhältnis zu anderen, strukturell sehr ähnlichen Triazinherbiziden) sowie die Flexibilität des Syntheseverfahrens im Vergleich zum bisherigen Stand der Technik wird durch Tabelle 5 illustriert.

**Tabelle 5:**

| Vergleich der erfindungsgemäßen TGP-Materialien mit dem Stand der Technik (Synthese durch Oberflächenfunktionalisierung via Photopfropfpolymerisation: funktionelles Monomer AMPS, Stöchiometrie relativ zu Templat 5:1, Vernetzer MBAA) in Bezug auf die Anwendung zur Membran-Festphasenextraktion (Selektivität: immer Vergleich zwischen Sorption für Terbumeton und Desmetryn) | | | | | |
|---|---|---|---|---|---|
| **Synthese** | | | **Membran-Festphasenextraktion** | | |
| | Templat | Lösungsmittel | unspez. Sorpt. n (µmol/cm²) | Spezifit ät TGP/Blan k | Selektivität Templat/Nicht-Templat |
| PP^{#} | Desmetryn | Wasser | 15.0 | 1.6 | 1.08 |
| PVDF | Desmetryn | Wasser | Synthese nicht möglich | | |
| PP-h^{a} | Desmetryn | Wasser | 1.2 8.2 n.b. | | |
| PVDF-h^{b} | Desmetryn | Wasser | 2.0 8.6 6.9 | | |
| PP^{#} | Terbumeton | MeOH | Synthese nicht möglich | | |
| PVDF | Terbumeton | MeOH | Synthese nicht möglich | | |
| PVDF-h^{c} | Terbumeton | MeOH | 2.1 | 5.3 | n.b. |
| PVDF-h^{d} | Terbumeton | MeOH | 0.5 | 22.0 | 10.8 |

| | | | | | |
|---|---|---|---|---|---|
| ^{**a**} TGP4; vgl. Beispiel 7; | | | | | |
| ^{**b**} TGP2; vgl. Beispiel 3; | | | | | |
| ^{**c**} TGP3; vgl. Beispiel 6; | | | | | |
| ^{**d**} TGP1; vgl. Beispiele 1&2; | | | | | |
| ^{**#**} Synthese auf Träger **ohne** dünne Polymerschicht (Stand der Technik) | | | | | |

### Beispiel 8. Mit Polyanilin für Metribuzin (4-Amino-3-Methylthio-6-tert.-Butylamino-1,2,4-triazin-5-on) geprägte modifizierte Polypropylen-Membran und Verwendung für Membran-Festphasenextraktion

Eine entsprechend Beispiel 5 modifizierte PP-Membran (25 cm²) wird in 10 ml einer 200 mM Lösung von Anilinhydrochlorid und 50 mM Metribuzin in Wasser eingebracht. Nach 10 min werden 10 ml einer 100 mM Lösung des Oxidationsmittels Ammoniumperoxodisulfat zugegeben und für 15 min unter Schütteln (300 rpm) zur Reaktion gebracht. Anschließend wird die Membran intensiv mit 10 mM Salzsäure, Wasser und Methanol gewaschen. Danach wird getrocknet und gravimetrisch der Modifizierungsgrad bestimmt. Eine nicht templat-geprägte Kontrollprobe wird nach analoger Vorschrift, aber ohne Templat, präpariert (s. Tabelle 6). Nach der Funktionscharakterisierung wie in Beispiel 2 beschrieben, mit Metribuzin, werden die in Tabelle 6 dargestellten Werte für die Herbizidsorption erhalten.
Als alternative Synthese für die erfindungsgemäßen TGP-Materialien eignet sich auch die chemische Initiierung einer Pfropfung und Vernetzung eines funktionellen Polymers auf einem speziellen Träger mit einer dünnen Polymerschicht.

**Tabelle 6:**

| Modifizierungsgrade (DG) sowie Metribuzinsorption aus Wasser bei der Filtration (vgl. Beispiel 4) für hydrophilierte PP-Membranen nach Synthesen mit (TGP) bzw. ohne (Blank) das Templat Metribuzin | | |
|---|---|---|
| PP-h | Funktionalisierung DG (µg/ cm²) | Sorption n(µmol/cm²)/% |
| TGP 5/1 | 210 | 7.9/30.0 |
| Blank 5/1 | 230 | 4.1/15.6 |

### Beispiel 9. Modifizierung von Polypropylen-Mikrotiterplatten mit einer dünnen hydrophilen vernetzten Polymerschicht (PP-h)

In die Wells einer 96er-Mikrotiterplatte aus PP (flacher Boden; Corning Costar Germany, Bodenheim) werden je 100 µl einer 100 mM Lösung von BP in Aceton pipettiert, danach wird die Platte verschlossen. Nach 2 Stunden wird die Lösung herauspipettiert, die Wells werden für 10 Sekunden mit 120 µl einer 1 mM Lösung von BP in Aceton gespült und anschließend für 15 Minuten an der Luft getrocknet. Danach werden in die Wells jeweils 100 µl einer Reaktionslösung, bestehend aus 75 g/l 2-Hydroxypropyl methacrylat (Röhm) und 7.5 g/l Tetraethylenglycol bismethacrylat (Röhm) in mit BP gesättigtem Wasser pipettiert. Die Mikrotiterplatte wird mit einer Glasplatte (Tief-UV-Filter, λ□ > 310 nm) abgedeckt. Nach 5 min erfolgt die Belichtung an einem UV-Trockner (Beltron GmbH) bei Halblast für insgesamt 10 min (10 Passagen durch die Belichtungszone). Anschließend wird die Mikrotiterplatte zunächst mit heißem Wasser und anschließend mit Aceton und Methanol gewaschen.
Als spezielle Träger für die erfindungsgemäße TGP-Synthese können oberflächenmodifizierte Mikrotiterplatten mit einer dünnen Polymerschicht mit niedriger unspezifischer Bindung hergestellt werden.

### Beispiel 10. Für Atrazin geprägte Mikrotiterplatte (MTP-TGP)

In die Wells einer nach Beispiel 9 modifizierten 96er-Mikrotiterplatte (PP-h) werden je 100 µl einer 100 mM Lösung von BP in Aceton pipettiert, danach wird die Platte verschlossen. Nach 2 Stunden wird die Lösung herauspipettiert, die Wells werden für 10 Sekunden mit 120 µl einer 1 mM Lösung von BP in Aceton gespült und anschließend für 15 Minuten an der Luft getrocknet. Danach werden in die Wells jeweils 100 µl einer Reaktionslösung, bestehend aus 10 mM Atrazin (Templat), 50 mM AMPS (funktionelles Monomer), 300 mM MBAA (Vernetzer) und 5 mM BP in Methanol pipettiert. Die Mikrotiterplatte wird dann mit einer Glasplatte (Tief-UV-Filter, λ > 310 nm) abgedeckt. Nach 30 min erfolgt die Belichtung an einem UV-Trockner (Beltron GmbH) bei Halblast für insgesamt 10 min (10 Passagen durch die Belichtu:ngszone). Anschließend wird die Mikrotiterplatte zunächst mit heißem Wasser, dann mit 50 mM Salzsäure, Wasser und Methanol gewaschen. Eine Kontrollpräparation (MTP-Blank) wird in analoger Weise, aber ohne Atrazin, hergestellt.

### Beispiel 11. Ersatz von biologischen Rezeptoren (hier Anti-Atrazin-Antikörper) in Mikrotiterplatten-Assays durch TGP-Oberflächen

Die nach Beispiel 10 erhaltenen Oberflächen der Wells der Mikrotiterplatte aus PP (MTP-TGP) zeigen das Verhalten von künstlichen Antikörpern für Atrazin, was sich in einem kompetitiven Triazin-Assay nutzen läßt:
In unterschiedlichen TGP-Wells werden jeweils 50 µl einer Lösung von Herbizid (Atrazin oder Metribuzin) in Konzentrationen von 10⁻⁷ bis 10⁻⁴ M in Wasser sowie danach 50 µl Atrazin-Peroxidase-Konjugate-Lösung (aus dem Pestanal Atrazin ELISA Kit; Riedel de Haen) pipettiert und unter Schütteln bei Raumtemperatur für 2 h inkubiert. Anschließend erfolgen Waschen, Entwickeln sowie Stoppen nach der Vorschrift des kommerziellen Assays (vgl. o.). Die Extinktionen bei 450 nm werden in einem Mikrotiterplattenlesegerät gemessen; als Kontrolle dienen Messungen in Wells, in denen ohne Templat modifiziert wurde (MTP-Blank) sowie die Bestimmungen mit einem anderen Herbizid (s. Tabelle 7).

**Tabelle 7:**

| Ergebnisse eines kompetitiven Assays für Atrazin unter Nutzung des Atrazin-Peroxidase-Konjugates sowie der Entwicklungslösungen (POD-Assay) eines kommerziellen Atrazin-ELISA-Kits mit Atrazin-geprägten (MTP-TGP) sowie Kontroll-Wells (MTP-Blank) einer PP-Mikrotiterplatte | | | | |
|---|---|---|---|---|
| | Extinktion (450nm) | | | |
| Atrazinkonzentration (M) | 10⁻⁷ | 10⁻⁶ | 10⁻⁵ | 10⁻⁴ |
| MTP-TGP | 0.75 | 0.69 | 0.61 | 0.55 |
| Metribuzinkonzentration (nM) | 0.78 | 0.73 | 0,76 | 0.69 |
| MTP-TGP | 10⁻⁷ | 10⁻⁶ | 10⁻⁵ | 10⁻⁴ |
| MTP-Blank | 0.78 | 0.77 | 0.74 | 0.72 |

In einem Assay zur Analytik von Herbiziden im ELISA-Format und nach einem etablierten ELISA-Protokoll zeigen die neuen TGP-Materialien eine ausgeprägte Spezifität (TGP vs. Blank) und Selektivität (Templat Atrazin vs Nicht-Templat Metribuzin).

### Beispiel 12. Für Peroxidase geprägte Mikrotiterplatte (MTP-TGP)

In den Wells einer nach Beispiel 9 modifizierten 96er-Mikrotiterplatte (PP-h) wird Anilin nach folgender Vorschrift polymerisiert: Zu 30 µl einer Lösung von Anilinhydrochlorid (720 mM) und Meerrettichperoxidase (1.67 mg/ml) in Wasser werden 20 µl Ammoniumperoxodisulfat (250 mM in Wasser) pipettiert, gründlich vermischt und bei Raumtemperatur unter Schütteln für 2 h zur Reaktion gebracht. Danach wird gründlich mit Wasser und anschließend mit 10 mM Natriumphosphatpuffer (pH = 7.5) gewaschen. Eine Kontrollpräparation (MP-Blank) wird in analoger Weise, aber ohne Peroxidase, hergestellt.

### Beispiel 13. Ersatz von biologischen Rezeptoren (hier Anti-Peroxidase-Antikörper) in Mikrotiterplatten-Assays durch TGP-Oberflächen

Eine nach Beispiel 12 modifizierte Mikrotiterplatte zeigt das Verhalten von künstlichen Antikörpern für Peroxidase. Um die Affinität der TGP-Oberflächen für das Templat zu demonstrieren, wird Meerrettichperoxidase aus einer Lösung einer Konzentration von 1 g/l unter Schütteln bei Raumtemperatur für 2 h adsorbiert. Danach wird mit 10 mM Natriumphosphatpuffer (pH = 7.5) gründlich gewaschen und dann mit Hilfe der Entwicklungslösungen aus dem Pestanal Atrazin-ELISA-Kit (Riedel de Haen) sowie nach den Vorschriften des Kits die POD-Aktivität gemessen. Die signifikant höheren Extinktionswerte (450 nm) für die TGP-Oberfläche (MTP-TGP/POD: 0.27 ± 0.08) im Vergleich zur nicht geprägten Kontrollprobe (MTP-Blank/POD: 0.12 ± 0.06) zeigen die bevorzugte Bindung von Peroxidase an den synthetischen Rezeptorstrukturen.

### Beispiel 14. Herstellung von Mikropartikel-Trägern mit einer dünnen hydrophilen vernetzten Polymerschicht (MP-h)

Zu einer Suspension (100 mg/ml; 10 ml) von Mikropartikeln (Durchmesser 3 µm, Styren-MSA-Copolymer-Kern mit einer hydroxyfunktionellen Oberfläche; microcaps GmbH, Rostock) in Wasser werden unter intensivem Rühren 10 ml einer frisch angesetzten Lösung aus 50 g/l 2-Hydroxypropyl methacrylat und 5 g/l Tetraethylenglycol bismethacrylat in 0.08 M wäßriger Salpetersäure zugegeben, intensiv mit Stickstoff gespült sowie auf 50°C erwärmt. Danach werden 4*10⁻³ M Cerammoniumnitrat zugegeben, und die Polymerisation wird für 2 Stunden bei 50°C, unter Stickstoff sowie intensivem Rühren durchgeführt. Danach werden 80 ml Wasser zugegeben; dann wird zentrifugiert, mit Methanol gewaschen, in Wasser resuspendiert und anschließend intensiv mit Wasser gewaschen (Dialyse gegen Wasser).

Als spezielle Träger für die erfindungsgemäße TGP-Synthese können oberflächenmodifizierte Mikropartikel mit einer dünnen Polymerschicht mit aufgrund der Hydrophilie niedriger unspezifischer Bindung hergestellt werden.

### Beispiel 15. Für Atrazin geprägte Mikropartikel (MP-TGP)

Zu einer Suspension (100 mg/ml; 5 ml) von nach Beispiel 14 modifizierten Mikropartikeln in Methanol (MP-h) werden 5 ml einer Reaktionslösung, bestehend aus 20 mM Atrazin (Templat), 100 mM AMPS (funktionelles Monomer), 600 mM MBAA (Vernetzer) und 20 mM BP in Methanol zugegeben. Diese Suspension wird in einer flachen Schale auf einem Rührtisch plaziert, mit einer Glasplatte dicht abgedeckt, mit Stickstoff gespült und intensiv gerührt. Nach 30 min erfolgt die Belichtung mit einer UV-Lampe (UVA-Spot 2000 mit Tief-UV-Filter H2; Dr. Hönle GmbH, Planegg) für 15 min.. Danach werden 40 ml Wasser zugegeben; dann wird zentrifugiert und anschließend zunächst mit heißem Wasser, dann mit 50 mM Salzsäure, Wasser und Methanol gewaschen (jeweils beendet durch Zentrifugieren); danach wird resuspendiert und intensiv mit Wasser gewaschen (Dialyse). Eine Kontrollpräparation (MP-Blank) wird in analoger Weise, aber ohne Atrazin, hergestellt.

### Beispiel 16. Ersatz von biologischen Rezeptoren (hier Anti-Atrazin-Antikörper) in Mikropartikel-Assays durch TGP-Oberflächen

Die nach Beispiel 15 erhaltenen Oberflächen der Mikropartikel (MP-TGP) zeigen das Verhalten von künstlichen Antikörpern für Atrazin, was sich in einem kompetitiven Triazin-Assay nutzen läßt:
In Wells einer 96er MultiScreen-Filterplatte (PVDF-Membran; Millipore GmbH, Eschborn) werden zu 200 µl der Mikropartikelsuspension (100 mg/ml) jeweils 50 µl einer Lösung von Herbizid (Atrazin oder Metribuzin) einer Konzentrationen von 10⁻⁵ M in Wasser sowie danach 50 µl Atrazin-Peroxidase-Konjugate-Lösung (aus dem Pestanal Atrazin ELISA Kit; Riedel de Haen) pipettiert und unter Schütteln bei Raumtemperatur für 2 h inkubiert. Anschließend erfolgen Absaugen, Waschen, Entwickeln sowie Stoppen nach der Vorschrift des kommerziellen Assays (vgl. o.). Die Lösungen werden entnommen und die Extinktionen bei 450 nm in einem UV-Spektrometer gemessen; als Kontrolle dienen Messungen mit Partikeln, die ohne Templat modifiziert wurden (MTP-Blank) sowie die Bestimmungen mit einem anderen Herbizid (s. Tabelle 8).
In einem Festphasenassay zur Analytik von Herbiziden im ELISA-Format und nach einem etablierten ELISA-Protokoll zeigen die neuen TGP-Materialien eine ausgeprägte Spezifität (TGP vs. Blank) und Selektivität (Templat Atrazin vs Nicht-Templat Metribuzin).

**Tabelle 8:**

| Ergebnisse eines kompetitiven Assays für Atrazin unter Nutzung des Atrazin-Peroxidase-Konjugates sowie der Entwicklungslösungen (POD-Assay) eines kommerziellen Atrazin-ELISA-Kits mit Atrazin-geprägten (MP-TGP) sowie Kontroll-(MP-Blank) Mikropartikeln | | |
|---|---|---|
| | Extinktion (450 nm) | |
| Konzentration 10⁻⁵ M | Atrazin | Metribuzin |
| MTP-TGP | 0.75 | 0.81 |
| MTP-Blank | 0.86 | 0.85 |

Es zeigen die Figuren:
- Fig. 1:: Schematische Darstellung der Prinzipien für die Synthese und Funktion von Templat-geprägten Polymeren (TGP) gemäß dem Stand der Technik.
- Fig. 2:: Schematische Darstellung der Herstellung von TGP-Kompositmaterialien mit hoher Spezifität und Selektivität durch Oberflächenfunktionalisierung von speziellen Trägern:
- a): Zweischicht-Struktur eines festen, mechanisch stabilen Trägers beliebiger Gestalt: Auf dem Trägermaterial befindet sich eine dünne Polymerschicht, die die unspezifische Bindung von Substanzen am Träger minimiert.
- b): Das Reaktionsgemisch für die TGP-Synthese, mit Templat und funktionellem Monomer sowie ggf. Initiator, Vernetzer und Lösungsmittel, wird auf die dünne Polymerschicht aufgebracht und dringt in diese, nicht aber in das Trägermaterial, ein. Dabei kann es für den Komplex aus Templat und funktionellem Monomer im Vergleich zu freiem Monomer und den anderen Komponenten des Reaktionsgemisches zu einer Behinderung durch die dünne Polymerschicht kommen (z.B. "Größenausschlußeffekt"), die zu einer Anreicherung von mit Templat komplexiertem funktionellem Monomer an der äußeren Oberfläche des Trägers führen kann. Bei der Kontrollpräparation ohne Templat (und damit ohne Komplex) gibt es diese Effekte nicht.
- c): Eine vernetzende Polymerisation wird selektiv an der Grenzfläche Trägermaterial / dünne Polymerschicht oder/und in der dünnen Polymerschicht initiiert; eine Funktionalisierung findet damit ausschließlich in der dünnen Polymerschicht statt. Die funktionellen Gruppen des komplexierten funktionellen Monomers werden dabei als "Templatabdrücke" vorzugsweise an der äußeren Oberfläche des Trägers fixiert. Bei der Kontrollpräparation ohne Templat gibt es keine Anreicherung von funktionellem Monomer an der äußeren Oberfläche (vgl. **b)**) und folglich keine spezifische sowie minimale unspezifische Bindung. Das TGP-Kompositmaterial besitzt dagegen eine hohe Bindungsspezifität sowie Selektivität für das Templat (aufgrund der "Templatabdrücke") bei geringer unspezifischer Bindung (aufgrund der Eigenschaften der dünnen Polymerschicht).
- Fig. 3:: Schematische Darstellung der Anwendungsmöglichkeiten für TGP-Kompositmaterialien mit hoher Spezifität und Selektivität am Beispiel von Membranen für die Substanz-spezifische Affinitätstrennung und/oder -analytik
- Fig. 4:: Terbumetonsorption (aus Wasser) bei der Filtration (vgl. Beispiel 2) für hydrophilierte PVDF-Membranen nach Synthesen mit (TGP) bzw. ohne (Blank) das Templat Terbumeton - Variation des funktionellen Monomers (vgl. Beispiel 1a).
- Fig. 5: Terbumetonsorption (aus Wasser) bei der Filtration (vgl. Beispiel 2) für hydrophilierte PVDF-Membranen nach Synthesen mit (TGP) bzw. ohne (Blank) das Templat Terbumeton - Variation der Konzentration des funktionellen Monomers (vgl. Beispiel 1b).
- Fig. 6: Terbumetonsorption (aus Wasser) bei der Filtration (vgl. Beispiel 2) für hydrophilierte PVDF-Membranen nach Synthesen mit (TGP) bzw. ohne (Blank) das Templat Terbumeton - Variation der Konzentration des Vernetzers (vgl. Beispiel 1c).
- Fig. 7: Herbizid-Sorption (aus Wasser) bei der Filtration (vgl. Beispiel 2) für hydrophilierte PVDF-Membranen nach Synthesen mit (TGP) bzw. ohne (Blank) das Templat Terbumeton - Variation des funktionellen Monomers (vgl. Beispiel 1a).

### Abkürzungsverzeichnis

- AA: Acrylsäure
- AMPS: 2-Acryloylamino-propan-2-sulfonsäure
- BET: Brunauer-Emmet-Teller; Methode zur Messung von Adsorptionsisothermen für die Bestimmung spezifischer Oberflächen von Festkörpern
- BP: Benzophenon
- DG: Modifizierungsgrad
- ELISA: Enzyme Linked Immuno-Sorbent Assay
- FTIR-ATR: Fourier Transform Infrared-Attenuation of Total Reflexion;
(Infrarotspektroskopie mit Abschwächung der Totalreflexion)
- GC: Gaschromatographie
- LM: Lösungsmittel
- M: mol/l; Konzentration
- MAA: Methacrylsäure
- MBAA: N,N'-Methylenbisacrylamid
- mM: mol/l; Konzentration
- MTP: Mikrotiterplatte
- MP: Mikropartikel
- n: Stoffmenge
- POD: Peroxidase
- PP: Polypropylen
- PVDF: Polyvinylidenfluorid
- REM: Raster-Elektronen-Mikroskopie
- TGP: Templat-geprägte Polymere
- UV: Ultraviolett

## Patentansprüche

1. Verfahren zur Herstellung eines Templat-geprägten Materials durch Synthese eines Templat-geprägten Polymers (TGP) über vernetzende Polymerisation funktioneller Monomere in Gegenwart eines Templates auf einem Träger,
**dadurch gekennzeichnet, daß**
ein Träger, der auf der Oberfläche eine dünne Polymerschicht aufweist, welche eine unspezifische Bindung von Templat, Templatderivaten und anderen Substanzen minimiert, mit dem Reaktionsgemisch, bestehend aus Polymerisationsinitiator, Templat, funktionellem Monomer, Vernetzer, Lösungsmittel und/oder Puffer versetzt wird, nach Sorption des Reaktionsgemisches in der dünnen Polymerschicht die Polymerisation gestartet und bis zum Erreichen der Aufnahmekapazität der dünnen Polymerschicht für das Templat-geprägte Polymer geführt wird, und das Templat in einem letzten Schritt entfernt wird, wobei der eingesetzte Träger so gewählt wird, daß er die Reaktionslösung nicht aufnehmen kann.

2. Verfahren nach Anspruch 1,
**dadurch gekennzeichnet, daß**
das Reaktionsgemisch zugegeben wird, indem zunächst die Hauptmenge des Polymerisationsinitiators in einem Lösungsmittel zugesetzt wird und anschließend das Reaktionsgemisch aus Restmenge des Initiators, Templat, funktionellem Monomer, Vernetzer, Lösungsmittel und/oder Puffer zugesetzt wird.

3. Verfahren nach Anspruch 1,
**dadurch gekennzeichnet, daß**
das Reaktionsgemisch zugegeben wird, indem zunächst der gesamte Polymerisationsinitiator in einem Lösungsmittel zugesetzt wird und anschließend das restliche Reaktionsgemisch aus Templat, funktionellem Monomer, Vernetzer, Lösungsmittel und/oder Puffer zugesetzt wird.

4. Verfahren nach Anspruch 1,
**dadurch gekennzeichnet, daß**
als Träger ein Formkörper aus einem hydrophoben Material eingesetzt wird und als dünne Polymerschicht eine Schicht aus einem hydrophilen Polymer dient.

5. Verfahren nach Anspruch 1,
**dadurch gekennzeichnet, daß**
als Träger ein anorganischer Festkörper eingesetzt wird und als dünne Polymerschicht eine Schicht aus einem hydrophilen oder hydrophoben Polymer dient.

6. Verfahren nach Anpruch 1,
**dadurch gekennzeichnet, daß**
als Träger ein Formkörper aus einem stark vernetzten organischen Polymer eingesetzt wird und als dünne Polymerschicht eine Schicht aus einem hydrophilen oder hydrophoben Polymer dient.

7. Verfahren nach einem der Ansprüche 4, 5 oder 6,
**dadurch gekennzeichnet, daß**
als Träger Filme, Folien, Platten, insbesondere Mikrotiterplatten, Reaktionsgefäße jeglicher Formen, Partikel, insbesondere Mikro- oder Nanopartikel, Fasern, insbesondere Hohlfasern, Gewebe, Vliese, Filter oder Membranen aus anorganischen oder organischen Materialien eingesetzt werden.

8. Verfahren nach Anspruch 4,
**dadurch gekennzeichnet, daß**
als hydrophobe Trägermaterialien hydrophobe organische Polymere eingesetzt werden, vorzugsweise Polypropylen, Polyethylen, Polystyren, Polysulfon, hydrophobe Polyamide, hydrophobe Polyester, Polycarbonat, Polyacrylnitril, Polyvinylidenfluorid, Polytetrafluoroethylen, hydrophobe Polyacrylate, sowie deren Derivate, Copolymere oder auch Blends dieser Polymere.

9. Verfahren nach Anspruch 5,
**dadurch gekennzeichnet, daß**
als anorganische Festkörper Gläser, Silikate, Keramiken oder Metalle bzw. deren Komposite, auch mit hydrophoben oder vernetzten organischen Polymeren, eingesetzt werden.

10. Verfahren nach Anspruch 6,
**dadurch gekennzeichnet, daß**
als stark vernetztes organisches Polymer stark vernetztes Polystyrol sowie Polystyrolderivate- oder copolymere, oder stark vernetzte Polyacrylate eingesetzt werden.

11. Verfahren nach Anspruch 7,
**dadurch gekennzeichnet, daß**
als Träger eine poröse Membran mit Porengrößen zwischen 2 nm und 10 µm, bevorzugt 100 nm bis 5 µm, eingesetzt wird.

12. Verfahren nach einem der Ansprüche 4, 5 oder 6,
**dadurch gekennzeichnet, daß**
als dünne hydrophile Polymerschicht eine Schicht aus vernetzten oder unvernetzten hydrophilen Polyacrylaten, Polyacrylamiden, Cellulose, Amylose, Agarose sowie deren Derivaten, Copolymeren oder Blends dient, insbesondere aus 2-Hydroxypropylmethacrylat, das mit Tetraethylenglycolbismethacrylat vernetzt wurde.

13. Verfahren nach Anspruch 5 oder 6,
**dadurch gekennzeichnet, daß**
als dünne hydrophobe Polymerschicht eine Schicht aus vernetzten oder unvernetzten fluorierten Polymeren, Siliconen, Paraffinen oder Wachsen sowie deren Derivaten, Copolymeren oder Blends dient.

14. Verfahren nach Anspruch 1,
**dadurch gekennzeichnet, daß**
die Dicke der Polymerschicht auf dem Träger von 1 nm bis 1 µm beträgt, vorzugsweise ca. 5 bis 20 nm.

15. Verfahren nach Anspruch 4,
**dadurch gekennzeichnet, daß**
als hydrophober Träger, der auf der Oberfläche eine dünne hydrophile Polymerschicht aufweist, eine hydrophilierte Polyvinylidenfluorid-Membran eingesetzt wird.

16. Verfahren nach Anspruch 1,
**dadurch gekennzeichnet, daß**
die Polymerisation als eine photoinitiierte vernetzende Pfropfcopolymerisation der funktionellen Monomere mit einer Substanz vom H-Abstraktionstyp als Photoinitiator und mit der dünnen Polymerschicht als Coinitiator durchgeführt wird.

17. Verfahren nach Anspruch 1,
**dadurch gekennzeichnet, daß**
als Template kleine Moleküle mit Molekülmassen bis zu 100 Da, größere Moleküle bis zu 1.000.000 Da oder auch Mikroorganismen oder Zellen eingesetzt werden.

18. Verfahren nach Anspruch 1,
**dadurch gekennzeichnet, daß**
als funktionelle Monomere polymerisationsfähige Verbindungen mit zur Wechselwirkung mit Templaten befähigten Gruppen, insbesondere Carboxyl-, Sulfonyl-, Sulfat-, Phosphat-, Amino- oder quartären Ammonium-Gruppen, oder deren Derivate, auch im Gemisch, eingesetzt werden, vorzugsweise AMPS, MAA oder AA.

19. Templat-geprägtes Material hergestellt nach dem Verfahren gemäß der Ansprüche 1 bis 18.

20. Verwendung des Templat-geprägten Materials nach Anspruch 19 in der Stofftrennung oder Analytik von flüssigen oder gasförmigen Stoffgemischen, die auf der spezifischen Bindung des Templates am TGP bei der Perfusion oder Diffusion durch das Templat-geprägte Material oder der Applikation auf das Templat-geprägte Material basieren.

21. Verwendung nach Anspruch 20 zur substanzspezifischen Stofftrennung mittels Affinitätsfiltration mit einem TGP-Material nach Anspruch 19 zur Aufkonzentrierung, Reinigung, Abtrennung, Freisetzung oder analytischen Bestimmung von Substanzen.

22. Verwendung nach Anspruch 20 zur substanzspezifischen Stofftrennung mittels Dialyse oder Elektrodialyse durch ein TGP-Material nach Anspruch 19 zur Aufkonzentrierung, Reinigung, Abtrennung, Abgabe oder analytischen Bestimmung von Substanzen.

23. Verwendung nach Anspruch 20 zur substanzspezifischen Stofftrennung mittels Festphasenextraktion, Chromatographie, Membranchromatographie, Elektrophorese oder kontrollierter Freisetzung aus einem Reservoir mit einem TGP-Material nach Anspruch 19 zur Aufkonzentrierung, Reinigung, Abtrennung, Abgabe oder analytischen Bestimmung von Substanzen.

24. Verwendung nach Anspruch 20 zur substanzspezifischen Stofftrennung und/oder Bindung und/oder chemischen Umwandlung durch ein TGP-Material nach Anspruch 19 als Sensor oder Katalysator zur Reinigung, Abtrennung oder analytischen Bestimmung von Substanzen.

25. Verwendung nach Anspruch 20 zur substanzspezifischen Stofftrennung und/oder Bindung und/oder chemischen Umwandlung durch ein TGP-Material nach Anspruch 19 als Blottingmembran, Teststreifen oder Träger, vorzugsweise als Reaktionsgefäß, Mikrotiterplatte oder Partikel für qualitative oder quantitative Assays oder zum Wirkstoff-Screening.

## Claims

1. A method of producing a template-textured material by synthesis of a template-textured polymer (TTP) using crosslinking polymerization of functional monomers in the presence of a template on a support,
**characterized in that**
a support having a thin polymer layer on the surface thereof which minimizes non-specific binding of template, template derivatives and other substances is added with a reaction mixture consisting of polymerization initiator, template, functional monomer, crosslinking agent, solvent and/or buffer and, following sorption of the reaction mixture in the thin polymer layer, the polymerization is initiated and continued until the absorption capacity of the thin polymer layer for the template-textured polymer is reached, and the template is removed in a final step, the support used being selected in such a way that it cannot absorb the reaction solution.

2. The method according to claim 1,
**characterized in that**
the reaction mixture is added in such a way that initially, the major portion of the polymerization initiator in a solvent is added and subsequently, the reaction mixture comprised of initiator residual amount, template, functional monomer, crosslinker, solvent and/or buffer is added.

3. The method according to claim 1,
**characterized in that**
the reaction mixture is added in such a way that initially, the entire polymerization initiator in a solvent is added and subsequently, the residual reaction mixture comprised of template, functional monomer, crosslinker, solvent and/or buffer is added.

4. The method according to claim 1,
**characterized in that**
a molded piece made of a hydrophobic material is used as support, and a layer of a hydrophilic polymer is used as thin polymer layer.

5. The method according to claim 1,
**characterized in that**
an inorganic solid is used as support, and a layer of a hydrophilic or hydrophobic polymer is used as thin polymer layer.

6. The method according to claim 1,
**characterized in that**
a molded piece comprised of a highly crosslinked organic polymer is used as support, and a layer of a hydrophilic or hydrophobic polymer is used as thin polymer layer.

7. The method according to any of claims 4, 5 or 6,
**characterized in that**
films, foils, plates, particularly microtiter plates, reaction vessels of any shape, particles, particularly micro- or nanoparticles, fibers, particularly hollow fibers, fabrics, fleeces, filters, or membranes made of inorganic or organic materials are used as support.

8. The method according to claim 4,
**characterized in that**
hydrophobic organic polymers are used as hydrophobic support materials, preferably polypropylene, polyethylene, polystyrene, polysulfone, hydrophobic polyamides, hydrophobic polyesters, polycarbonate, polyacrylonitrile, poly(vinylidene fluoride), polytetrafluoroethylene, hydrophobic polyacrylates, as well as derivatives, copolymers or blends of these polymers.

9. The method according to claim 5,
**characterized in that**
glasses, silicates, ceramics, or metals or composites thereof, also including hydrophobic or crosslinked organic polymers, are used as inorganic solids.

10. The method according to claim 6,
**characterized in that**
highly crosslinked polystyrene and polystyrene derivatives or copolymers, or highly crosslinked polyacrylates are used as highly crosslinked organic polymer.

11. The method according to claim 7,
**characterized in that**
a porous membrane having a pore size between 2 nm and 10 µm, preferably from 100 nm to 5 µm, is used as support.

12. The method according to any of claims 4, 5 or 6,
**characterized in that**
a layer of crosslinked or non-crosslinked hydrophilic polyacrylates, polyacrylamides, cellulose, amylose, agarose, as well as derivatives, copolymers or blends thereof, particularly of 2-hydroxypropyl methacrylate crosslinked with tetraethylene glycol bismethacrylate, is used as thin hydrophilic polymer layer.

13. The method according to claim 5 or 6,
**characterized in that**
a layer of crosslinked or non-crosslinked fluorinated polymers, silicones, paraffins, or waxes, as well as derivatives, copolymers or blends thereof is used as thin hydrophobic polymer layer.

14. The method according to claim 1,
**characterized in that**
the thickness of the polymer layer on the support is from 1 nm to 1 µm, preferably about 5 to 20 nm.

15. The method according to claim 4,
**characterized in that**
a hydrophilized poly(vinylidene fluoride) membrane is used as hydrophobic support having a thin hydrophilic polymer layer on the surface thereof.

16. The method according to claim 1,
**characterized in that**
the polymerization is conducted as a photoinitiated crosslinking graft copolymerization of the functional monomers, using an H abstraction type substance as photoinitiator and the thin polymer layer as co-initiator.

17. The method according to claim 1,
**characterized in that**
small molecules having a molecular mass of up to 100 Da, larger molecules of up to 1,000,000 Da, or even microorganisms or cells are used as templates.

18. The method according to claim 1,
**characterized in that**
polymerizable compounds including groups capable of interacting with templates, particularly carboxyl, sulfonyl, sulfate, phosphate, amino, or quaternary ammonium groups, or derivatives thereof, also in admixture, preferably AMPS, MAA or AA, are used as functional monomers.

19. A template-textured material, produced according to the method as claimed in claims 1 to 18.

20. Use of the template-textured material according to claim 19 in the separation of materials or in analytics of fluid or gaseous mixtures of substances, which procedures are based on specific binding of the template to TTP during perfusion or diffusion through the template-textured material or when applied onto the template-textured material.

21. The use according to claim 20 in substance-specific separation of materials by means of affinity filtration using a TTP material according to claim 19 to effect concentration, purification, separation, liberation, or analytical determination of substances.

22. The use according to claim 20 in substance-specific separation of materials by means of dialysis or electrodialysis using a TTP material according to claim 19 to effect concentration, purification, separation, delivery, or analytical determination of substances.

23. The use according to claim 20 in substance-specific separation of materials by means of solid-phase extraction, chromatography, membrane chromatography, electrophoresis, or controlled liberation from a reservoir using a TTP material according to claim 19 to effect concentration, purification, separation, delivery, or analytical determination of substances.

24. The use according to claim 20 in substance-specific separation of materials and/or binding and/or chemical conversion by means of a TTP material according to claim 19 as sensor or catalyst to effect purification, separation or analytical determination of substances.

25. The use according to claim 20 in substance-specific separation of materials and/or binding and/or chemical conversion by means of a TTP material according to claim 19 as blotting membrane, test strip or support, preferably as reaction vessel, microtiter plate or particles for qualitative or quantitative assays or in active substance screening.

## Revendications

1. Procédé de fabrication d'un matériau texturé par une matrice par synthèse d'un polymère texturé par une matrice (TGP) obtenu par polymérisation réticulante de monomères fonctionnels en présence d'une matrice sur un support,
**caractérisé en ce**
**qu'**un support doté à sa surface d'une couche mince de polymère, qui minimise une liaison non spécifique de la matrice, des dérivés de la matrice et d'autres substances, est traité avec un mélange de réaction composé d'un amorceur de polymérisation, d'une matrice, d'un monomère fonctionnel, d'un agent de réticulation, d'un solvant, et/ou de tampon, on démarre la polymérisation après sorption du mélange de réaction dans la couche mince de polymère, on la conduit jusqu'à obtenir une capacité d'absorption de la couche mince de polymère pour le polymère texturé par une matrice, et on élimine la matrice au cours d'une dernière étape et ce en sélectionnant le support utilisé de manière à ce qu'il ne puisse pas absorber la solution de réaction.

2. Procédé selon la revendication 1,
**caractérisé en ce**
**qu'**on ajoute le mélange de réaction en ajoutant d'abord la quantité principale d'amorceur de polymérisation dans un solvant et en ajoutant ensuite le mélange de réaction comportant la quantité restante d'amorceur, la matrice, le monomère fonctionnel, l'agent de réticulation, le solvant et/ou le tampon.

3. Procédé selon la revendication 1,
**caractérisé en ce**
**qu'**on ajoute le mélange de réaction en ajoutant d'abord la quantité totale d'amorceur de polymérisation dans un solvant et en ajoutant ensuite le mélange de réaction restant comportant la matrice, le monomère fonctionnel, l'agent de réticulation, le solvant et/ou le tampon.

4. Procédé selon la revendication 1,
**caractérisé en ce**
**qu'**en tant que support, on utilise un corps moulé constitué d'un matériau hydrophobe et qu'à titre de couche mince de polymère, on utilise une couche constituée d'un polymère hydrophile.

5. Procédé selon la revendication 1,
**caractérisé en ce**
**qu'**en tant que support, on utilise un corps solide minéral et qu'à titre de couche mince de polymère, on utilise une couche constituée d'un polymère hydrophile ou hydrophobe.

6. Procédé selon la revendication 1,
**caractérisé en ce**
**qu'**en tant que support, on utilise un corps moulé constitué d'un polymère organique fortement réticulé et qu'à titre de couche mince de polymère, on utilise une couche constituée d'un polymère hydrophile ou hydrophobe.

7. Procédé selon une des revendications 4, 5 ou 6,
**caractérisé en ce**
**qu'**en tant que support, on utilise des films, des feuilles, des plaques, notamment des plaques de microtitration, des récipients de réaction de n'importe quelles formes, des particules, notamment des micro- ou des nanoparticules, des fibres, notamment des fibres creuses, des tissés, des non-tissés, des filtres ou des membranes constituées de matériaux minéraux ou organiques.

8. Procédé selon la revendication 4,
**caractérisé en ce**
**qu'**en tant que matériaux de support hydrophobes, on utilise des polymères organiques hydrophobes, de préférence du polypropylène, du polyéthylène, du polystyrène, du polysulfone, des polyamides hydrophobes, des polyesters hydrophobes, du polycarbonate, du polyacrylonitrile, du poly(vinylidène fluorure), du poly(tétrafluoroéthylène), des polyacrylates hydrophobes, ainsi que leurs dérivés, leurs copolymères ou aussi des mélanges de ces polymères.

9. Procédé selon la revendication 5,
**caractérisé en ce**
**qu'**en tant que corps solides minéraux, on utilise des verres, des silicates, des céramiques ou des métaux, ou aussi leurs matériaux composites comportant des polymères organiques hydrophobes ou réticulés.

10. Procédé selon la revendication 6,
**caractérisé en ce**
**qu'**en tant que polymère organique fortement réticulé, on utilise du polystyrène fortement réticulé ainsi que des dérivés ou des copolymères de polystyrène fortement réticulé, ou des polyacrylates fortement réticulés.

11. Procédé selon la revendication 7,
**caractérisé en ce**
**qu'**en tant que support, on utilise une membrane poreuse ayant une taille des pores comprise entre 2 nm et 10 µm, de préférence de 100 nm à 5 µm.

12. Procédé selon une des revendications 4, 5 ou 6,
**caractérisé en ce**
**qu'**en tant que couche mince de polymère hydrophile, on utilise une couche constituée de polyacrylates, de polyacrylamides hydrophiles, réticulés ou non, de cellulose, d'amylose, d'agarose, ainsi que de leurs dérivés ou leurs copolymères, ou des mélanges d'entre eux, notamment de 2-hydroxypropylméthacrylate réticulé avec du tétraéthylèneglycoldiméthacrylate.

13. Procédé selon la revendication 5 ou 6,
**caractérisé en ce**
**qu'**en tant que couche mince de polymère hydrophobe, on utilise une couche constituée de polymères fluorés réticulés ou non, de silicones, de paraffines, ou de cires ainsi que de leurs dérivés, leurs copolymères ou leurs mélanges.

14. Procédé selon la revendication 1,
**caractérisé en ce que**
l'épaisseur de la couche de polymère sur le support est de comprise entre 1 nm et 1 µm, de préférence entre env. 5 et 20 nm.

15. Procédé selon la revendication 4,
**caractérisé en ce**
**qu'**en tant que support hydrophobe comportant une couche mince de polymère hydrophile en surface, on utilise une membrane en poly(vinylidène fluorure) rendue hydrophile.

16. Procédé selon la revendication 1,
**caractérisé en ce**
**qu'**on réalise la polymérisation sous forme d'une copolymérisation réticulante des monomères fonctionnels par greffage avec un photoamorçage en utilisant une substance du type élimination de H en tant que photoamorceur et la couche mince de polymère en tant que coamorceur.

17. Procédé selon la revendication 1,
**caractérisé en ce**
**qu'**en tant que matrice, on utilise des petites molécules d'une masse moléculaire allant jusqu'à 100 Da., des molécules plus grandes d'une masse moléculaire allant jusqu'à 1.000.000 Da. ou aussi des micro-organismes ou des cellules.

18. Procédé selon la revendication 1,
**caractérisé en ce**
**qu'**en tant que monomères fonctionnels, on utilise des composés aptes à polymériser avec des groupes aptes à une interaction avec les matrices, notamment des groupes carboxyle, sulfonyle, sulfate, phosphate, amino ou des ammonium quaternaire, ou leurs dérivés, également en mélange, de préférence de l'AMPS, du MAA ou de l'AA.

19. Matériau texturé par une matrice fabriqué en utilisant le procédé selon les revendications de 1 à 18.

20. Utilisation du matériau texturé par une matrice selon la revendication 19 dans la séparation de substances ou l'analyse de mélanges de substances liquides ou gazeuses qui sont basées sur la liaison spécifique de la matrice au TGP au cours de la perfusion ou de la diffusion à travers le matériau texturé par une matrice ou de l'application sur le matériau texturé par une matrice.

21. Utilisation selon la revendication 20 pour la séparation de substances spécifique à une substance par filtration d'affinité avec un matériau TGP selon la revendication 19 pour la concentration, la purification, la séparation, la libération ou la détermination analytique de substances.

22. Utilisation selon la revendication 20 pour la séparation de substances spécifique à une substance par dialyse ou électrodialyse en utilisant un matériau TGP selon la revendication 19 pour la concentration, la purification, la séparation, la libération ou la détermination analytique de substances.

23. Utilisation selon la revendication 20 pour la séparation de substances spécifique à une substance par extraction sur phase solide, chromatographie, chromatographie sur membrane, électrophorèse ou libération contrôlée à partir d'un réservoir avec un matériau TGP selon la revendication 19 pour la concentration, la purification, la séparation, la libération ou la détermination analytique de substances.

24. Utilisation selon la revendication 20 pour la séparation de substances spécifique à une substance et/ou la liaison et/ou la transformation chimique en utilisant un matériau TGP selon la revendication 19 utilisé en tant que détecteur ou catalyseur pour la purification, la séparation ou la détermination analytique des substances.

25. Utilisation selon la revendication 20 pour la séparation de substances spécifique à une substance et/ou la liaison et/ou la transformation chimique en utilisant un matériau TGP selon la revendication 19 en tant que membrane de blotting, bandelette de test ou support, de préférence en tant que récipient de réaction, microplaque de titration ou particule pour un dosage qualitatif ou quantitatif ou pour le screening des agents actifs.
